(19) Europäisches Patentamt
European Patent Office
Office européen des brevets

(11) **EP 4 542 465 A1**

(12) **EUROPEAN PATENT APPLICATION**

(43) Date of publication:
23.04.2025 Bulletin 2025/17

(21) Application number: 23204286.1

(22) Date of filing: 18.10.2023

(51) International Patent Classification (IPC):
*G06N 20/00* (2019.01)      *H04B 7/06* (2006.01)
*H04B 7/08* (2006.01)

(52) Cooperative Patent Classification (CPC):
**H04B 7/0634; G06N 20/00; H04B 7/0617;**
**H04B 7/086**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Nokia Solutions and Networks Oy**
**02610 Espoo (FI)**

(72) Inventors:
• KAYA, Aliye
Chatham, NJ 07928 (US)

• FEKI, Afef
92330 Sceaux (FR)
• GRANGEAT, Christophe
78220 Viroflay (FR)
• ZEJNILAGIC, Azra
81379 Munich (DE)
• BECHTA, Kamil
53-611 Wroclaw (PL)

(74) Representative: **Nokia EPO representatives**
**Nokia Technologies Oy**
**Karakaari 7**
**02610 Espoo (FI)**

(54) **METHOD AND APPARATUS FOR NETWORK INTEGRATION, MODEL REFINEMENT, DATA AGGREGATION AND AUGMENTATION FOR IMPROVED ML BASED EIRP PREDICTION**

(57)     An apparatus comprising: means for training a neural network configured to be used to infer an effective isotropic radiated power for at least one angle and at least one weight; means for obtaining, based on the training, a trained neural network which is used for inference of the effective isotropic radiated power for the at least one angle and the at least one weight; and means for transmitting the trained neural network to at least one distributed unit.

FIG. 2

**Description**

TECHNICAL FIELD

The examples and non-limiting example embodiments relate generally to communications and, more particularly, to a method and apparatus for network integration, model refinement, data aggregation and augmentation for improved ML based EIRP prediction.

BACKGROUND

It is known for a network device to use resources such as beams for communication in a communication network.

SUMMARY

In accordance with an aspect, an apparatus includes means for training a neural network configured to be used to infer an effective isotropic radiated power for at least one angle and at least one weight; means for obtaining, based on the training, a trained neural network which is used for inference of the effective isotropic radiated power for the at least one angle and the at least one weight; and means for transmitting the trained neural network to at least one distributed unit.

In accordance with an aspect, an apparatus includes means for receiving, from a radio unit, a trained neural network used to infer an effective isotropic radiated power for at least one angle and at least one weight; means for determining, using the trained neural network, the effective isotropic radiated power for the at least one angle and the at least one weight; and means for controlling at least one transmission or reception resource associated with the apparatus, based on the determined effective isotropic radiated power.

In accordance with an aspect, an apparatus includes means for determining a predicted effective isotropic radiated power for at least one angle and at least one weight; wherein the predicted effective isotropic radiated power is determined within a time period using a trained neural network for at least one antenna gain range; means for determining whether the predicted effective isotropic radiated power is below an expected value; and means for performing at least one action, in response to the predicted effective isotropic radiated power being below an expected value.

In accordance with an aspect, an apparatus includes means for determining whether a multi-dimensional pattern function and parameters for determining variables in the function are available; means for creating multi-dimensional patterns from weight vectors using the multi-dimensional pattern function, in response to the multi-dimensional pattern function and the parameters for determining the variables in the function being available; means for creating the multi-dimensional patterns through interpolation, in response to the multi-dimensional pattern function not being available or the parameters for determining the variables in the function not being available; means for creating a dataset from the multi-dimensional patterns; means for training a neural network configured to infer an effective isotropic radiated power for at least one angle and at least one weight, using the dataset; and means for determining a predicted effective isotropic radiated power using the trained neural network for at least one antenna gain range.

In accordance with an aspect, an apparatus includes means for performing at least one of: training a neural network using training data received from a plurality of radio access network nodes, or transmitting, to at least one network entity, a request to receive a trained neural network; wherein the neural network is configured to be used to infer an effective isotropic radiated power; and means for publishing the neural network to provide access to the neural network for the plurality of radio access network nodes or at least one network entity.

In accordance with an aspect, an apparatus includes at least one processor; and at least one memory storing instructions that, when executed by the at least one processor, cause the apparatus at least to: train a neural network configured to be used to infer an effective isotropic radiated power for at least one angle and at least one weight; obtain, based on the training, a trained neural network which is used for inference of the effective isotropic radiated power for the at least one angle and the at least one weight; and transmit the trained neural network to at least one distributed unit.

In accordance with an aspect, an apparatus includes at least one processor; and at least one memory storing instructions that, when executed by the at least one processor, cause the apparatus at least to: receive, from a radio unit, a trained neural network used to infer an effective isotropic radiated power for at least one angle and at least one weight; determine, using the trained neural network, the effective isotropic radiated power for the at least one angle and the at least one weight; and control at least one transmission or reception resource associated with the apparatus, based on the determined effective isotropic radiated power.

In accordance with an aspect, an apparatus includes at least one processor; and at least one memory storing instructions that, when executed by the at least one processor, cause the apparatus at least to: determine a predicted effective isotropic radiated power for at least one angle and at least one weight; wherein the predicted effective isotropic radiated power is determined within a time period using a trained neural network for at least one antenna gain range; determine whether the predicted effective isotropic radiated power is below an expected value; and perform at least one action, in response to the predicted effective isotropic radiated power being below an expected value.

In accordance with an aspect, an apparatus includes at least one processor; and at least one memory storing instructions that, when executed by the at least one processor, cause the apparatus at least to: determine whether a multi-dimensional pattern function and parameters for determining variables in the function are available; create multi-dimensional patterns from weight vectors using the multi-dimensional pattern function, in response to the multi-dimensional pattern function and the parameters for determining the variables in the function being available; create the multi-dimensional patterns through interpolation, in response to the multi-dimensional pattern function not being available or the parameters for determining the variables in the function not being available; create a dataset from the multi-dimensional patterns; train a neural network configured to infer an effective isotropic radiated power for at least one angle and at least one weight, using the dataset; and determine a predicted effective isotropic radiated power using the trained neural network for at least one antenna gain range.

In accordance with an aspect, an apparatus includes at least one processor; and at least one memory storing instructions that, when executed by the at least one processor, cause the apparatus at least to: perform at least one of: train a neural network using training data received from a plurality of radio access network nodes, or transmit, to at least one network entity, a request to receive a trained neural network; wherein the neural network is configured to be used to infer an effective isotropic radiated power; and publish the neural network to provide access to the neural network for the plurality of radio access network nodes or at least one network entity.

BRIEF DESCRIPTION OF THE DRAWINGS

The foregoing aspects and other features are explained in the following description, taken in connection with the accompanying drawings.

FIG. 1 shows an overview of an example NWDAF.

FIG. 2 shows a high level view of instantaneous EIRP estimation and actual EIRP control.

FIG. 3 shows network components where the herein described EIRP prediction framework could be integrated.

FIG. 4 shows the interface which could be deployed at the vendor side.

FIG. 5 depicts an operator publisher and subscriber.

FIG. 6 depicts a gNB publisher and subscriber.

FIG. 7 shows an EIRP prediction performance control loop at the gNB with training capabilities.

FIG. 8 shows an EIRP prediction performance control loop at the gNB with no training capabilities.

FIG. 9 shows an update to an AI/ML model after a specific configuration change (gNB with training capabilities).

FIG. 10 shows an update to an AI/ML model after a specific configuration change (operator).

FIG. 11 is Table 3 which shows a performance comparison.

FIG. 12 depicts an algorithm for training set generation and adjustment.

FIG. 13 depicts training setup.

FIG. 14 depicts inference.

FIG. 15 depicts a structure of the herein described neural network.

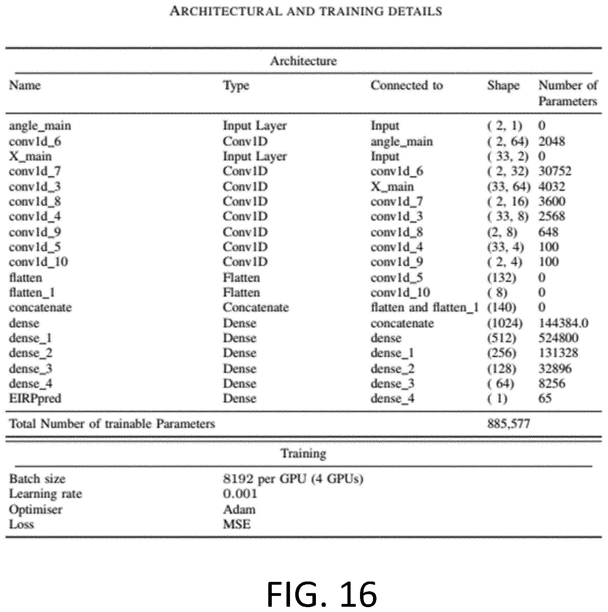

FIG. 16 is Table 4, which shows architectural and training details.

FIG. 17 illustrates a horizontal and vertical cut comparison between the predicted and ground truth patterns.

FIG. 18 shows real gain values subtracted from predicted gain values.

FIG. 19 is Table 5 which shows prediction error.

FIG. 20 illustrates an ORAN use case.

FIG. 21 depicts O-RU vendor model refinement.

FIG. 22 is a block diagram of one possible and non-limiting system in which the example embodiments may be practiced.

FIG. 23 is an example apparatus configured to implement the examples described herein.

FIG. 24 shows a representation of an example of non-volatile memory media used to store instructions that implement the examples described herein.

FIG. 25 is an example method, based on the examples described herein.

FIG. 26 is an example method, based on the examples described herein.

FIG. 27 is an example method, based on the examples described herein.

FIG. 28 is an example method, based on the examples described herein.

FIG. 29 is an example method, based on the examples described herein.

DETAILED DESCRIPTION OF EXAMPLE EMBODIMENTS

Regarding actual EIRP control, the actual maximum approach has been specified in IEC 62232:2022 [IEC 62232:2022, Determination of RF field strength, power density and SAR in the vicinity of a base station for the purpose of evaluating human exposure]. It relies on actual power or EIRP monitoring and control features. The actual EIRP corresponds to the time-averaged value of EIRP that is used for compliance with exposure limits. It is calculated using instantaneous EIRP values that are depending on traffic variation (PRB allocation) and gain values that can also vary in time and space when beamforming is implemented. For a base station (BS) using beamforming antenna, the actual EIRP values are function of beamforming weight vector and antenna-specific parameters, e.g. antenna geometry, types of various antenna elements used in the array, additional weighting, side-lobe suppression, connections to radiators, wiring, tapering. If a predefined beamforming technology is used, the instantaneous EIRP could be computed for predefined weight vectors and stored. However, when dynamic beamforming weights are applied, the pre-stored beam patterns cannot be used for determining the instantaneous EIRP accurately, used for assessing the actual EIRP and controlling that it does not exceed the configured thresholds during BS operation.

The beam gain field is straightforward to compute as follows:

Let $\psi_a(\vartheta,\varphi)$ describe the 'beam gain field' of beam weight set $a$ which might be, e.g., proportional to the electric field strength square. The radiated power density $p(\vartheta,\varphi)$ can then be expressed in terms of $\psi_a(\vartheta,\varphi)$. It is given as a linear superposition of the contributions of all individual antenna elements, weighted by the respective complex element pattern $\rho(\vartheta,\varphi)$ and the complex beamforming weight $a_{m,n}$ applied at row m and column n of the antenna. Assumed for this calculation is a regular antenna grid with complex element pattern for all elements, and the derivation can be extended also to non-uniform antenna panels. The beam gain field can then be expressed as:

$$\psi_a^*(\vartheta,\varphi) = \sum_{m,n} a_{m,n}^* \, \rho_{m,n}(\vartheta,\varphi) \, \Delta_{m,n}(\vartheta,\varphi)$$

where:

$$\Delta_{m,n}(\vartheta,\varphi) = \exp\frac{2\pi i}{\lambda}\left[md_y \sin\varphi \sin\vartheta + nd_z \cos\varphi\right]$$

$d_y$ and $d_z$ refer to element spacing, so it is related to the geometry of the array.

Although it is straightforward to compute, it is not easy to compute the EIRP for dynamic beamforming vectors in runtime, near real-time or with limited latency.

**Actual EIRP monitoring and control features include:** The actual EIRP adjustment features allow the operator to monitor and control the equivalent isotropic radiated power (EIRP) over the cell. For massive MIMO adaptive antennas supporting beamforming, it is allowed to define a cell segment grid considering the local environment constraints of the cell. In each of the defined cell segment the actual EIRP is approximated based on the allocated power per scheduled beam. One actual EIRP threshold can be defined per cell segment in the grid and the L2-PS will guarantee that the threshold is not exceeded in each segment of the grid, by controlling time-averaged power and beam allocation. For passive antennas actual EIRP is monitored and controlled at the boresight (max EIRP) based on actual transmitted power. The actual EIRP is thus controlled over whole cell area - not per cell segment. EIRP monitoring functionality is supported by an EIRP monitor feature, whereas the controlling functionality has the scope of an actual EIRP control extension feature. A method for controlling radio frequency emissions may be implemented.

The NWDAF (Network Data Analytics Function) is part of the architecture specified in TS 23.501 [3GPP TS 23.288 V16.12.0 (2022-09); 3rd Generation Partnership Project; Technical Specification Group Services and System Aspects; Architecture enhancements for 5G System (5GS) to support network data analytics services (Release 16)] and uses the mechanisms and interfaces specified for 5GC in TS 23.501 [3GPP TS 23.288 V16.12.0 (2022-09); 3rd Generation Partnership Project; Technical Specification Group Services and System Aspects; Architecture enhancements for 5G System (5GS) to support network data analytics services (Release 16)] and OAM (Operations, Administration and Maintenance) services.

The NWDAF interacts with different entities for different purposes, namely: Data collection based on subscription to events provided by AMF (Access and Mobility Management Function), SMF (Session Management Function), PCF (Policy Control Function), UDM (Unified Data Management), NSACF (Network Slice Access Control Function), AF (directly or via NEF) and OAM (Administration and Maintenance); [Optionally] Analytics and Data collection using the DCCF (Data Collection Coordination Function); Retrieval of information from data repositories (e.g. UDR (Unified Data Repository) via UDM for subscriber-related information); Data collection of location information from LCS (Location Services) system; [Optionally] Storage and retrieval of information from ADRF (Analytics Data Repository Function); [Optionally] Analytics and Data collection from MFAF (Messaging Framework Adaptor Function); Retrieval of information about NFs (e.g. from NRF for NF-related information); On demand provision of analytics to consumers, as specified in clause 6. Provision of bulked data related to Analytics ID(s).

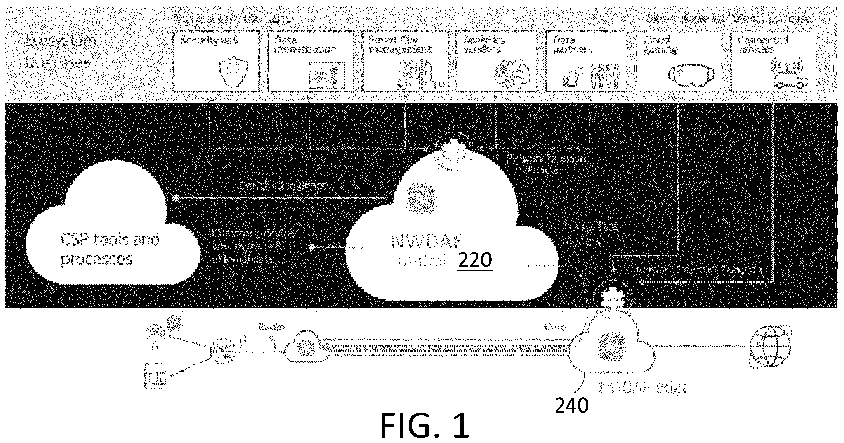

FIG. 1 shows an overview of an example NWADF. Shown is NWDAF central 220 and NWDAF edge 240. The Network Data Analytics Function (220, 240) is responsible for providing network analysis information upon request or subscription from 3GPP-Core network functions. The NWDAF provides data collection from 5GC NFs and OAM, data processing, analysis, and exposure, embedded ML functions, slice specific data analytics to the other NFs, and enables network ML automation use-cases.

In 5G, with the introduction of NWDAF-like products different services are available. Such functionalities enable real-time computation of EIRP using AI/ML. The training, data collection and inference functions could be distributed across the network.

open radio access network (ORAN): ORAN is a Radio Access Network (RAN) system that allows interoperation between cellular network equipment provided by different vendors. ORAN would enable the radio units to be compatible with distributed units even if they are provided by 3rd party vendors. O-RU is defined as the radio unit in ORAN. O-DU refers to the distributed unit. In a mobile radio system where the actual EIRP per segment of solid angle has to be controlled, it is typically a task of the instance which is scheduling the transmissions, i.e., not in the radio unit or layer 1 but at higher level. Therefore, the O-DU unit has to calculate the EIRP, i.e. power multiplied by gain, radiated into a certain direction. That could be computed as long as the antenna geometry and the complex radiation pattern of the single radiators are known. If the radio unit is provided by a third-party vendor, those antenna parameters would be company confidential information. Therefore, an NN based approach allows to calculate the gain without knowing this confidential information. Moreover, implementation of accurate actual EIRP control for dynamic weight vectors that are calculated by massive MIMO algorithms in real time requires significant computational resources which may not be available in the O-RU or O-DU, for example calculated by eigenvalue decomposition of the channel covariance matrix, known also as Eigen mode-based beamforming (EBB). A framework to compute actual EIRP with an acceptable latency is needed, while obeying the information asymmetry between the radio unit and the distributed unit.

The instantaneous EIRP may be calculated using pre-defined beam patterns. This method cannot be used for real-time based beam generation because it would not be as accurate for dynamically computed weight vectors which may result in beam patterns not similar to pre-stored ones.

An ORAN based solution (an application) for actual EIRP control focuses on neural network based EIRP prediction. However, the integration of the AI/ML framework into the current network is not defined. Moreover, the neural network described herein outperforms that particular ORAN based solution. In an example embodiment described herein, a convolutional neural network has two branches. Having two branches of a convolutional neural networks has clear advantages. Other neural network implementations may be used in other embodiments of the examples described herein. The previous solution does not provide any adaptation to configuration changes, hardware failures etc. It does not provide any mechanisms for data set generation and aggregation.

A mechanism for actual Equivalent Isotropic Radiated Power (EIRP) control of at least two radio signal paths may be implemented. This method is performed by a coordinating controller of a site. The site comprises the at least two radio signal paths. The method comprises obtaining, from inner controllers of the radio signal paths, information of long-term time averaged incoming and outgoing traffic per radio signal path. The method comprises determining a time varying reference value of actual transmission power or EIRP per radio signal path based on equalizing terms determined from the information of long-term time averaged incoming and outgoing traffic, antenna gain information per radio signal path, and a condition on total actual EIRP for the site. The method comprises performing individual actual EIRP control per radio signal path by providing to each respective inner controller, the time varying reference value determined for the radio signal path controlled by that inner controller.

However, there is currently no system which provides highly accurate actual EIRP control for weight vectors that are calculated only at real-time, for example calculated by eigenvalue decomposition of the channel covariance matrix, known also as Eigen mode-based beamforming (EBB). The actual EIRP prediction may be integrated into the network. Moreover, the performance of the ML model is tightly related to the data used for the model training and the data collection for this goal.

The main problems solved by the examples described herein are the following (1-3):

1. How and where to run AI/ML framework to compute the actual EIRP in a segment if the CU and DU are owned by the same company and under the constraints of reliability and delay (real-time estimation). Here AI/ML framework includes both training and inference of deep learning-based solution. Neural network integration could be designed to predict the actual EIRP in real-time, near real-time, or within any given acceptable latency. The neural network performance needs to be monitored and the neural network needs to be adapted to the changes in configuration, HW changes and performance requirements. Described herein are performance control loops to address and trigger neural network adaptation.

2. The training data has a crucial impact on the performance of AI/ML based EIRP Prediction methodologies. However, the generation of training data is not always feasible, or the collection may be limited due to confidentiality agreements between O-RU and O-DU vendors. Thus, the second problem considered by the examples described herein is the following: How to collect the required training data to enable AI/ML model training for actual EIRP prediction while keeping required performance thresholds.

3. ORAN: ORAN would enable the radio units to be compatible with distributed units even if they are provided by 3rd party vendors. O-RU is defined as the radio unit in ORAN. O-DU refers to the distributed unit. In a mobile radio system where the actual EIRP per segment of solid angle has to be controlled, it is typically a task of the instance which is scheduling the transmissions, i.e., not in radio unit or layer 1 but higher. Therefore, O-DU unit has to calculate the EIRP radiated into a certain direction, i.e. power multiplied by beam gain. That could be computed as long as the antenna geometry and the complex radiation pattern of the single radiators are known. If the radio unit is provided by a third-party vendor, those antenna parameters would be company confidential information. Typically, they are highly protected and may not be shared. Moreover, implementation of accurate actual EIRP control for weight vectors that are calculated in real time by massive MIMO algorithms requires significant computational resources which may not be available in the O-RU or O-DU, for example calculated by eigenvalue decomposition of the channel covariance matrix, known also as Eigen mode-based beamforming (EBB). The third problem considered herein is the following: How to obey the information asymmetry between the radio unit and distributed unit while computing the actual EIRP while providing the actual EIRP estimation in real-time?

Described herein is a method and apparatus which enables real-time instantaneous EIRP prediction (optionally with NWDAF assistance). The herein described procedure includes training samples collection as well as training at multiple levels. In addition, the herein described framework includes a monitoring step which includes monitoring the performance of the AI/ML method. The monitoring step triggers, when necessary, a model update (through refinement or re-training of the model with an updated training dataset). The herein described framework also enables model exchange and further improvement, and makes use of transfer learning capabilities for adaptation to new scenarios.

As used herein "actual EIRP" means "time-averaged EIRP". The actual EIRP monitoring and control algorithms described herein are based on an inner loop that calculate the instantaneous EIRP (or EIRP per 100 ms sample) and then there is an outer loop that calculates and controls the actual EIRP, i.e. the time-averaged value over a number of instantaneous EIRP samples from the inner loop. The real-time calculation issues are valid for the inner loop. Thus, the examples described herein focus on how the calculate in real-time the instantaneous EIRP in order to evaluate the EIRP samples. Then the actual EIRP evaluation and control is performed by the outer loop, which does not need to be real-time. Therefore, the examples described herein do not refer to "real-time actual EIRP".

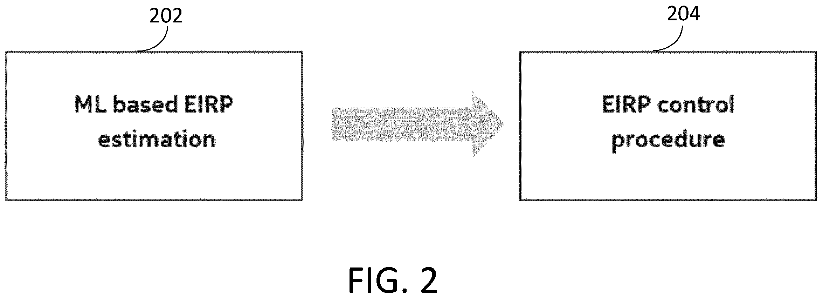

Referring to FIG. 2, which shows a high level view of instantaneous EIRP estimation (202) and actual EIRP control (204), this EIRP based estimation with ML approach (202) allows to get real-time prediction of the instantaneous EIRP level which in turn is used for any conventional actual EIRP control procedure (204) running in the network (either real-time or near real-time).

The examples described herein include (1-4):

1. ML based instantaneous EIRP estimation framework using deep learning model. It includes an offline step for data collection and model training to prepare a trained model, used thereafter for real-time inference. Described herein is an ORAN compatible integration of the framework into the network which solves the third problem (How to obey the information asymmetry between the radio unit and distributed unit while computing the actual EIRP while providing the instantaneous EIRP estimation in real-time?) where O-RU and O-DU are owned different entities. Described herein is integration where DU, RU and CU are owned by the same vendors or vendors with information exchange agreements.

2. Integration of the herein described solution in the network with the assistance of NWDAF function. As additional embodiment relates to the training and inference both performed by gNB.

3. Publication-subscription (Pub-sub) like network integration for actual EIRP AI/ML based Prediction into the network components. Capability to adjust the initially predicted actual EIRP in case of operator or site-specific configuration.

4. A method and apparatus for data aggregation and augmentation targeted for more efficient and generalizable ML model training for instantaneous EIRP prediction. The AIML algorithm is used for real time EIRP prediction, while other algorithms are used for deriving actual EIRP from EIRP predicted values. In this approach, the ML model is a neural network which considers as input antenna pattern information and output the instantaneous EIRP estimation. Different types and sources of the data can be used, summarized in the below table. However, it is to be noted that data can be either 'real' or 'augmented/generated' synthetically. The main challenge is to have the right balance among these different data (see Table 1) such that the ML model trained with the aggregated data performs accurately.

Table 1- Description of data for training

|  | RU, DU and CU owned by the same company | O-RU and O-DU owned by different companies |
|---|---|---|
| MSI Files (Horizontal and Vertical Cuts) | Available | Available |
| 3D Pattern generation Function | Available | Not likely |
| 3D Patterns | Available | Not likely |
| Weight Vectors | Available | Not likely |

In multi-user massive MIMO (mMIMO), beamforming weight vectors are frequently computed to serve varying user distributions. The weight vectors need to be applied to all transmitting elements on the antenna panel. When those weights are applied, the antenna gain may be heavily increased in certain directions at the cost of other directions. Standards used by regulators, such as IEC 62232:2022, request monitoring of the actual equivalent isotopic radiated power (EIRP) of an emitter over time to guarantee that certain thresholds are not exceeded in any direction. mMIMO beamforming systems may change the direction and the gain of the beam main lobe frequently. That led to the issue that the conventional approach that only considers the maximum possible radiated power over the full sphere over time and the maximum gain is no longer sufficient, as may lead to overestimation of electromagnetic field exposure and therefore overly conservative sizes of compliance distances, which then may have negative impact on radio system performance. The standard implementation in some places has been enhanced such that actual EIRP is to be controlled per segment of solid angle and the thresholds can apply for any such segment. It may be difficult to compute the instantaneous EIRP in real-time in order to evaluate and control the actual EIRP. To avoid real-time computation of the instantaneous EIRP, operators tend to choose to reduce the configured maximum transmit power, which may cause devices to perform below their capabilities, especially impacting cell coverage range.

The examples described herein provide a framework which would enable real-time computations of actual EIRP for dynamic beam vectors and which runs in the network as complement to actual EIRP control procedure.

## 1) Network Integration AI/ML based actual EIRP Prediction Framework for real-time EIRP Computation

Described herein is a framework and methodology which enables real-time actual EIRP prediction which can make use of NWDAF-like frameworks. The AI/ML actual EIRP Inference function is specific to antenna panel. That antenna panel could be sold to operators worldwide and be deployed at various locations. However, the antenna panel at each location may have difference due to hardware errors, configuration preferences (e.g. turning/on off certain portions of the panel). Also, at each site different user statistics, use of different beamforming algorithms, environment variations could create diverse dataset which could be used in retraining the neural network.

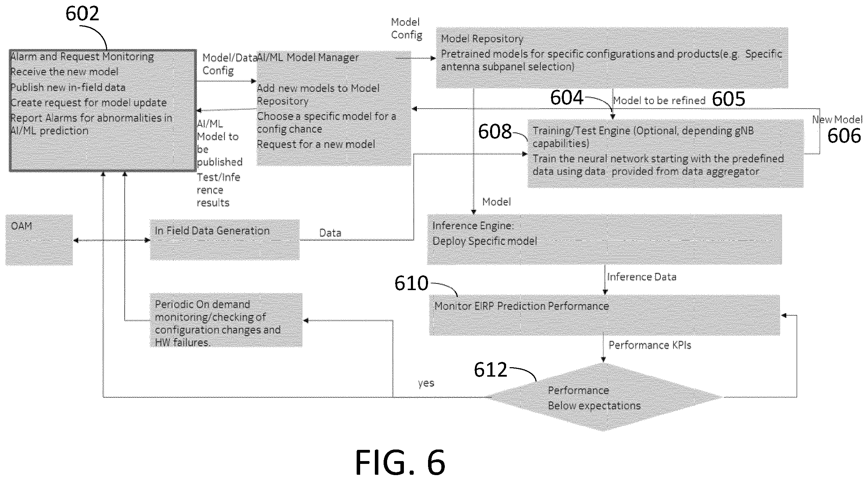

Described herein is a pub-sub like network integration for actual EIRP AI/ML based Prediction into the network components as depicted in FIG. 6.

There will be three different publishing functions to ensure exchange of data and AI/ML model: 1) Vendor specific Publishing/Subscribing, 2) Operator Specific Publishing/Subscribing, 3) gNB Publishing/Subscribing

### Vendor Specific Pub-Sub:

A vendor is a gNB manufacturer which sells various types of gNB products. It has capabilities to create training data and train the neural networks. It may either provide the inference function to the operators when the product is sold. It could also provide a service to the operators to update and refine the neural network periodically or based on those needs. Such a service could be run in the network at NWADF function (as a new service).

### Operator Specific Pub-Sub:

In an operator's network same gNB product could be used at various locations. The operator could collect the weight vectors from various gNBs and train the network at its edge. It may also push the network parameter updates to the gNBs. If the operator does not have any training capabilities it may share the weight vectors and data with the vendor and receive network updates.

### gNB Pub-Sub:

If the gNB has AI/ML training capabilities the received neural network could be further trained with the data collected in field. It could also share the weight vectors collected in field with the vendor or central AI/ML training instances for further refinement and then update its inference function with those changes. Such inference function updates could be done periodically, based on an alarm (e.g. malfunctioning antenna elements), configuration changes (antenna element or subpanel muting).

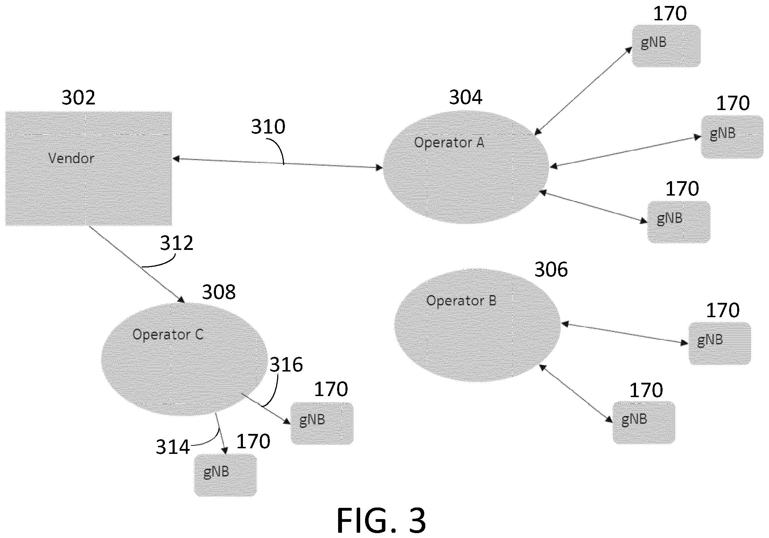

FIG. 3 shows network components where the herein described EIRP prediction framework could be integrated. In particular, FIG. 3 shows a possible information flow between vendor 302, operators (304, 306, 308) and gNBs 170. Operators (304, 306, 308) may have varying preferences sharing the neural network with the vendor 302. They may be reluctant to share proprietary actual EIRP data with 3rd parties. Vendor 302 may collect data, models and performance indicators from all operators which deploy their products and have willingness to share such information. In FIG. 3 Operator A 304 has full collaboration with the vendor 302 (as shown with bidirectional arrow 310). Operator A 304 may share data and models with the vendor 302. Likewise, the vendor 302 may share with operator 304 neural network updates and other relevant information. Operator A 304 may fully offload the training to the vendor 302 as well. In that scenario operator A 304 would publish its required configurations or data to the vendor 302.

Operator B 306 receives the neural network associated with the product only during product set-up. After that all fine-tuning is done within Operator B's ecosystem. No data is shared with the vendor 302.

Operator C 308 has gNBs 170 which have AI/ML training capabilities. Periodically operator C 308 receives updates from the vendor 302 which it shares with the gNBs 170. No information is shared with the vendor 302. The information flow is from the vendor 302 to operator 308 (as shown by unidirectional arrow 312) and from operator 308 to the gNB 170 only (as shown by unidirectional arrows 314 and 316).

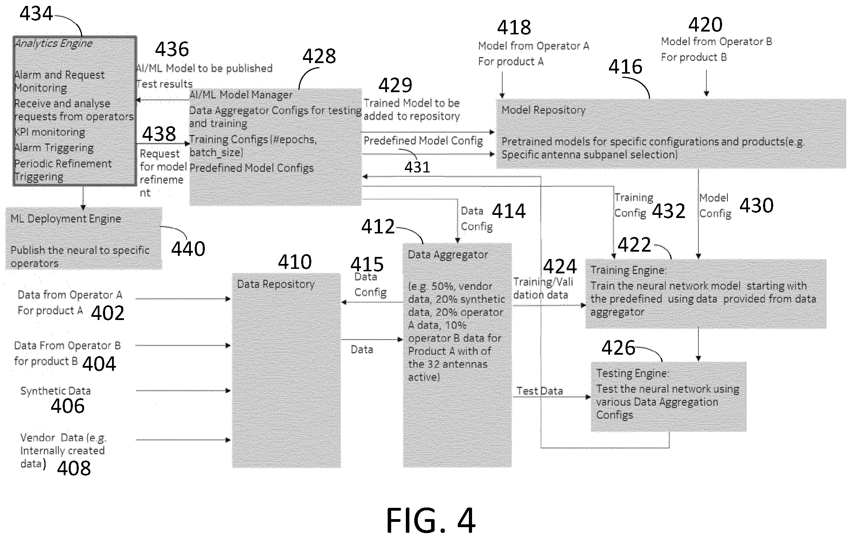

FIG. 4 shows vendor publish (Pub) and subscribe (Sub). In particular, FIG. 4 shows the interfaces which could be deployed at the vendor side:

Data Repository (410): Operators share for various products and their configurations (402, 404) with the vendor. Vendor also generates data (408) for training purposes using synthetic weight vectors or weight vectors (406), which are defined in product codebooks.

Data Aggregator (412): Creates data sets according to a data config 414, which defines the quantities and percentages of patterns to be included from each class in the data set.

Model Repository (416): It contains all the pretrained AI/ML models for all products and configurations. The operators may provide their AI/ML models (418, 420) refined with the field data to the vendor as well

Training Engine (422): Trains the neural network starting with the predefined neural network received from the model repository 416 and the training data 424 from the data aggregator

Testing Engine (426): Tests the trained neural network performance and determines the prediction error in various EIRP ranges.

AI/ML Model Manager (428): Triggers training by choosing a pre-trained model 429 (model config 430, 431), training parameters (training config 432) and data sets (data config 414, 415) according to the request from the analytics engine 434. The trained models along with their test results are sent back to AI/ML manager. If they are satisfactory the models are saved in model repository. They are also sent (436) to the Analytics engine 434.

Analytics engine (434): Analytics engine 434 monitors the messages received from operators. Those could be requests for models for specific configurations. As an example, an operator may request a new model where a certain subpanel is muted. It ignites periodic training requests 438 or based on alarms received. The goal of the analytics engine 434 is continuous improvement of models. It configures AI/ML Manager 428 with data and model configurations and analyzes the test results 436.

ML Deployment Engine (440): Publishes the neural network models to the operators. It may also share data or performance KPIs with the newly trained models

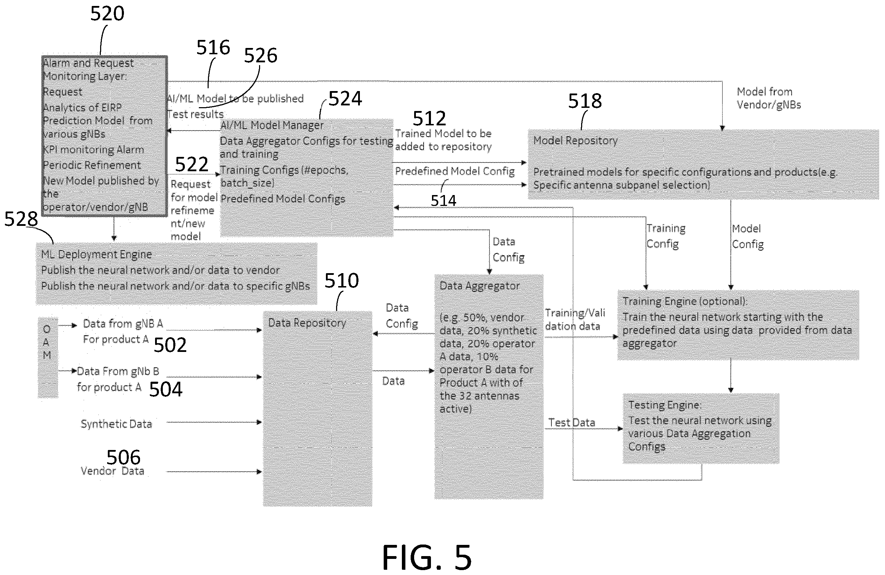

FIG. 5 shows operator Pub/Sub. FIG. 5 shows the instances on the operator side. An operator may subscribe to the vendor for training the neural network, receive pretrained models to be refined. It may also forgo training and testing and offload that task to the vendor. An operator has the advantage of collecting the data (502, 504) from various gNBs 170, and data (506) from vendors for various configurations. The received data is saved in the data repository 510. AI/ML pre-trained models (512) from gNBs 170 with training capabilities (514) and published models (516) from the vendors are saved in the model repository 518.

Alarm and request monitoring layer 520 monitors and requests performance indicators from various gNBs 170. Alarm and request monitoring layer 520 may ignite periodic refinement 522 of a model based on the currently available data and received models from vendors and gNBs. If a gNB requests a model to take into account a hardware failure or a new configuration model refinement request 522 is conveyed to the AI/ML Model Manager 524. Alarm and request monitoring layer 520 also analyzes new model test results 526.

ML Deployment Engine (528): ML deployment engine 528 publishes data and AI/ML models to other gNBs and vendors.

FIG. 6 shows gNB Pub-Sub. FIG. 6 shows the instances running at the gNB side. If the gNB has no training capabilities it would request model updates using the Alarm and Request Monitoring Engine 602. The trained model 605 could be refined (604) with the gNB using the in-field generated data. If the configuration is changed, e.g. subpanels are muted for energy savings or if there is a hardware failure, a new neural network needs to be retrained. Pretrained models may need to be requested from the operator or new models 606 need to be trained 608 using in field collected data. If the EIRP prediction performance does not meet required performance indicators (determined at 612 with, for example, monitoring 610) a new training instance, model refinement instance (604) could be requested as well.

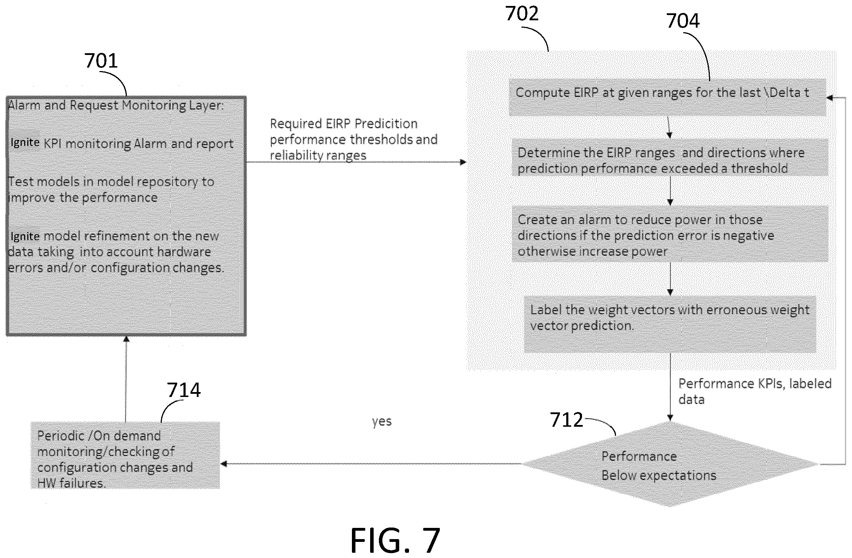

FIG. 7 shows an example EIRP prediction performance control loop at the gNB with training capabilities. Such control mechanisms could also be deployed at the operator and vendor side. Actual EIRP Prediction performance is monitored (702) by the alarm and request monitoring layer 701. A deviation from existing performance could have multiple causes. One reason could be the model being inadequate. In that scenario, other models could be tested or the existing models could be refined with the in-field collected data, if there is hardware error, a new model may need to be trained with in-field collected data.

As shown in FIG. 7, if at 712 it is determined that the performance is below expectations, the method transitions to 714. If at 712 it is determined that the performance is not below expectations (expectations are met or exceeded), the method transitions to 704. At 714, the method includes periodic or on demand monitoring and/or checking of configuration changes and HW failures.

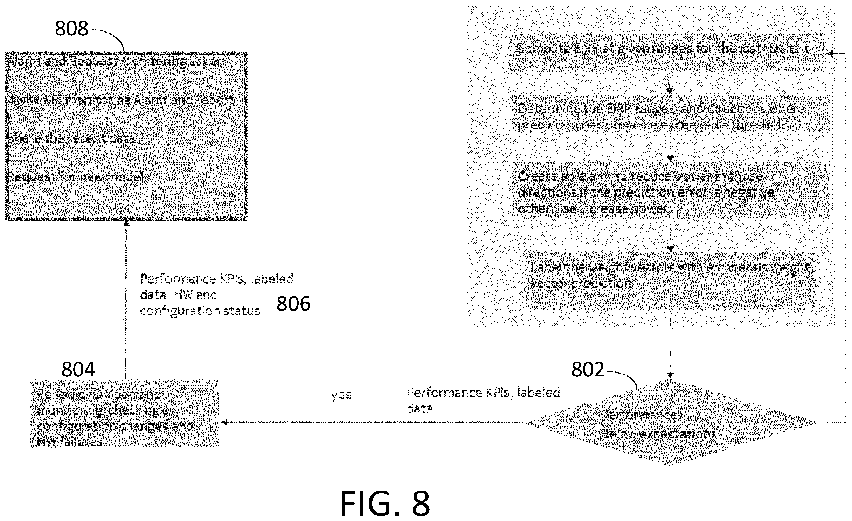

FIG. 8 shows an EIRP prediction performance control loop at gNB 170 with no training capabilities. If the performance is below expectations (determined at 802), the root-cause is inspected, for example at 804. All the relevant data 806 is shared with the Alarm and request monitoring layer 808, which layer 808 requests a new model to be retrained outside of the gNB 170 and generates alarms on performance.

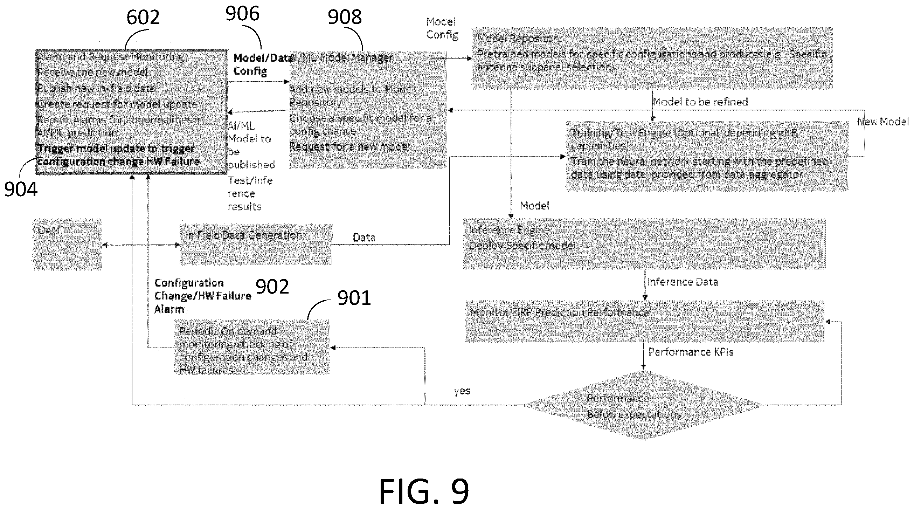

FIG. 9 shows an update to the AI/ML model after a specific configuration change (gNB with training capabilities). In particular, FIG. 9 shows the steps for a model update caused by configuration change or HW failure/adjustment (902). Such changes are monitored (at 901) periodically or based on abnormalities. If they are detected they are reported to "Alarm and Request Monitoring Layer" 602. That layer triggers model updates 904 by conveying new model/and data configs 906 to the AI/ML model manager 908.

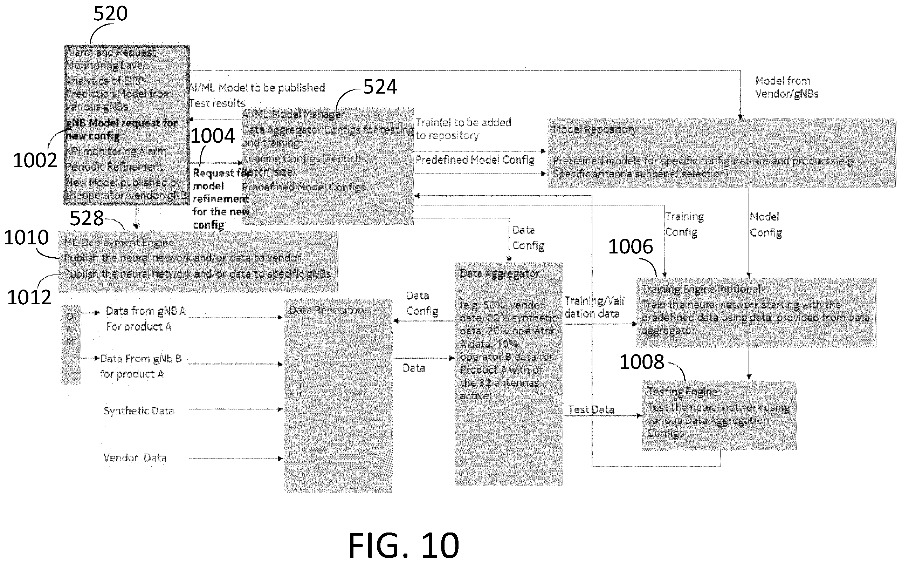

FIG. 10 shows an update to the AI/ML model after a specific configuration change on the operator side. FIG. 10 shows the steps for model update needed because of a configuration change or HW failure/adjustment at the Operator. Such changes are monitored periodically or based on abnormalities as reported by the gNBs. The Alarm and Request Monitoring Layer 520 monitors requests 1002 from gNB 170 for new AI/ML models. The Alarm and Request Monitoring Layer 520 triggers model updates by conveying the updated model/and data configs (1004) to the AI/ML model manager 524. After training 1006 and testing 1008 new models are published to the vendor (1010) and published to the selected gNBs (1012) using ML deployment engine 528.

**2) Training Data Set Generation and Aggregation:**

To generate training data, a 3D pattern and the weight vector used for generating that 3D pattern are needed. From each (3D pattern, weight vector) pair there may be $360\times360= 129600$ $(w,\theta,\phi,EIRP)$ tuples could be generated which could be directly fed into the training module. The angular resolution of $360\times360$ is an example. The angular resolution can be chosen as desired at any granularity. (3D pattern, weight vector) pairs could be obtained by multiple ways (1-3):

1) 3D Interpolation of horizontal and vertical patterns from msi files.

2) Evaluation of the instantaneous EIRP for a specific weight vectors at the antenna interface.

3) Weight vector as an input to 3D pattern generation function. The weight vectors could obtained in multiple ways: a. Use of randomly generated weight vectors: Real and Imaginary parts of the weight vectors are drawn from statistical distributions with or without element-wise or vector-wise normalization, b. Use of product specific weight vectors used for generating codebooks for that specific product. Since some of them may be optimized they would contain high gain patterns, c. Steering vectors in specific directions, d. Combinations of different weight vectors, e. Synthetic weight vectors computed by massive MIMO algorithms in offline simulations using statistical channel models, f. Saved weight vectors at the DU from past transmissions.

The availability depends on the information exchange between the DU, CU and RU:

Table 2

|  | RU, DU and CU owned by the same company | O-RU and O-DU owned by different companies |
|---|---|---|
| MSI Files (Horizontal and Vertical Cuts) | Available | Available |
| 3D Pattern generation Function | Available | Not likely |
| 3D Patterns | Available | Not likely |
| Weight Vectors | Available | Not likely |

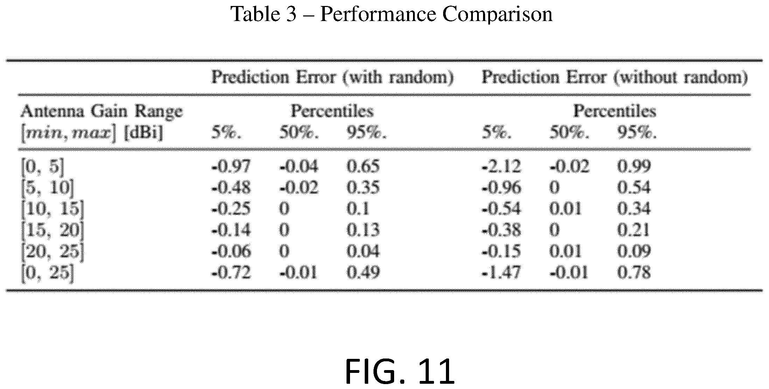

The aggregation of training data has quite an impact on training performance. FIG. 11 shows Table 3. Table 3 shows the comparison between the use of synthetic patterns in the training set. "With random" in Table 3 refers to the case where 8000 product patterns and 6000 synthetic patterns generated from random weight vectors are used for training. Without random" in Table 3 refers to the case where only 8000 product patterns are used for training.

The random vectors are generated such that the real and imaginary parts of the weight vector elements are drawn from a uniform distribution between -0.5 and 0.5. However, the random vectors may be generated such that the real and imaginary parts of the weight vector elements are drawn from any complex distribution. The 3D patterns for the product patterns and random patterns are generated by feeding the weight vector to the same 3D pattern generation function. Capability to generate synthetic patterns instead of the real one has great advantage on generating training data in large quantities. Use of synthetic patterns generated from random weight vectors improves the performance especially at the side-lobes and for low gain values.

In the absence of a 3D pattern generation function the most convenient way is to create 3D beam patterns from msi files through interpolation. However, interpolation is only an approximation of 3D beam pattern. Therefore, it is not diverse enough for training. All 360x360 instantaneous EIRP values are derived from 360 horizontal cut and 360 vertical cut values if the patterns are sampled by 1-degree. Large number of msi files would be needed to train the neural network.

NGMN BASTA is developing a standardized of 3D pattern generation function. That would enable the 3D patterns to be created from weight vectors efficiently.

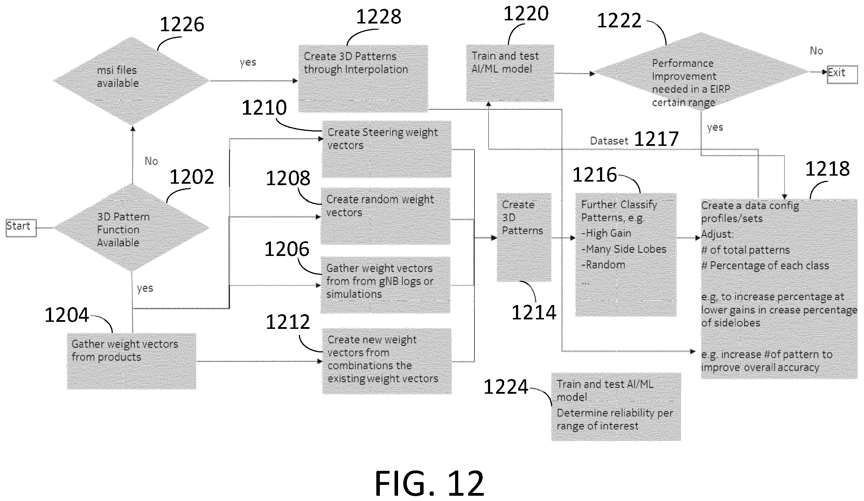

FIG. 12 shows an algorithm for training set generation and adjustment. If the 3D pattern generation function is available (determined at 1202), the best way is to create 3D patterns 1214 from weight vectors directly through use of 3D pattern generation function. There are multiple ways to obtain weight vectors (i-v): i. Weight vectors defined in product specifications (1204), e.g. PMI, SSB, SRS..., ii. Weight vectors collected on a gNB (1206) from running Massive MIMO Algorithms, iii. Synthetic weight vectors where elements are drawn randomly or according through a criteria from complex random weight vectors (1208), iv. Steering vectors where the antenna panel is ignited towards specific directions (1210), v. New weight vectors through combining the existing ones as parameters of a function (1212).

Each weight vector will result in a different pattern with different characteristics. Random weight vectors will most likely create patterns with many side lobes and lower gains. Steering vectors will have directive beams. The weight vector collected in a gNB would be representative of user distributions and environment characteristics. The 3D patterns could be further classified (1216) through their characteristics.

Datasets 1217 could be created (at 1218) through choosing specific percentage of patterns from each class. The distributing among classes is referred to herein as data set config.

Multiple data set configs could be created simultaneously and be used by AI/ML training algorithm (1220, 1224). The set 1217 which yields best training performance (determined at 1222) could be selected for further training.

A model performance is benchmarked towards specific KPI thresholds e.g., the EIRP prediction error should be within 1 dB, and higher gains the value should be smaller. If such a threshold is not met (determined at 1222) a new data set 1217 could be created to further refine the model towards that goal. As an example, the ratio and number of random patterns in the training set could be increased.

As shown in FIG. 12, if at 1202, it is determined that the 3D pattern function is not available, the method transitions to 1226. At 1226, if it determined whether msi files are available. If at 1226, it is determined that msi files are available, the method transitions to 1228. At 1228, 3D patterns are created through interpolation. From 1228, the method transitions to 1218.

## 3) AI/ML based EIRP Prediction

Described herein are steps of the AI/ML EIRP prediction framework which show accurate computation of the EIRP per sample for given beam vectors. This framework could run standalone within a gNB or with stages distributed across network functionalities as described above.

The goal of the AI/ML framework is learning the capability how to estimate EIRP for a given weight vector and angular direction.

### a) Training and Data Collection:

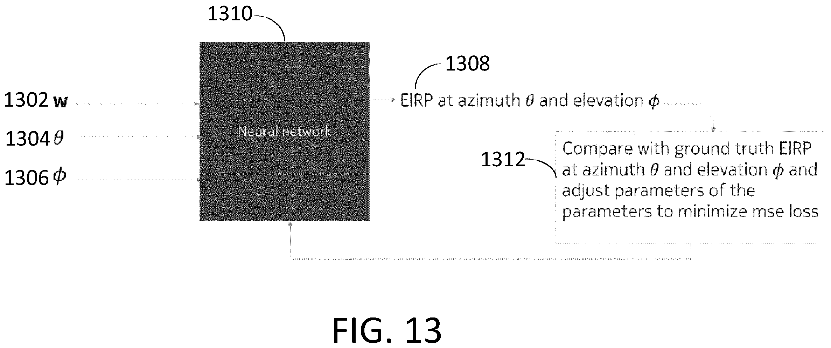

Referring to FIG. 13, which FIG. 13 shows the training setup, for training data collection, 3D antenna patterns are generated from weight vectors and product specific 3D pattern generation equations available to the gNB provider. This task is difficult to compute in real-time but offline it could be done for any number of weight vectors and type of beams. Each weight vector is associated with a 3D Pattern. A 3D pattern has 360x360 azimuth and elevation angles and corresponding EIRP values for each angle pair or for another granularity, for example every 0.1. From a single 3D pattern 360x360=129600 (w, $\theta$, $\varphi$, EIRP) combinations are generated, where the combination includes w 1302, $\theta$ 1304, $\varphi$ 1306, and EIRP 1308. Labeling could be done offline.

The training will be done by minimizing the minimum square error between the correct EIRP and the EIRP as predicted at 1312 by the neural network 1310 given the input parameters $w$, $\theta$, $\phi$ as shown in Fig. 13. $\theta$, $\phi$ could be restricted to integer values covering entire 3D space in 1-degree steps.

### b) Inference:

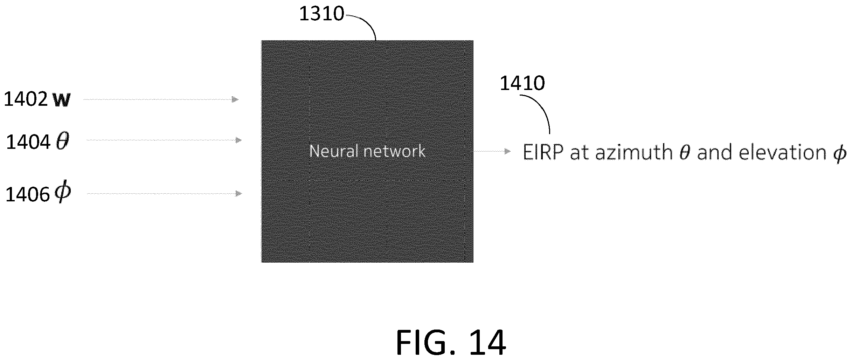

FIG. 14 shows inference. After training is completed, the neural network 1310 is run in inference mode. In inference mode the only required parameters are neural network weight vector w 1402, azimuth $\theta$ 1404, elevation $\phi$ 1406. The output of the neural network is EIRP 1410 in that specific direction.

### c) Example Neural network structure

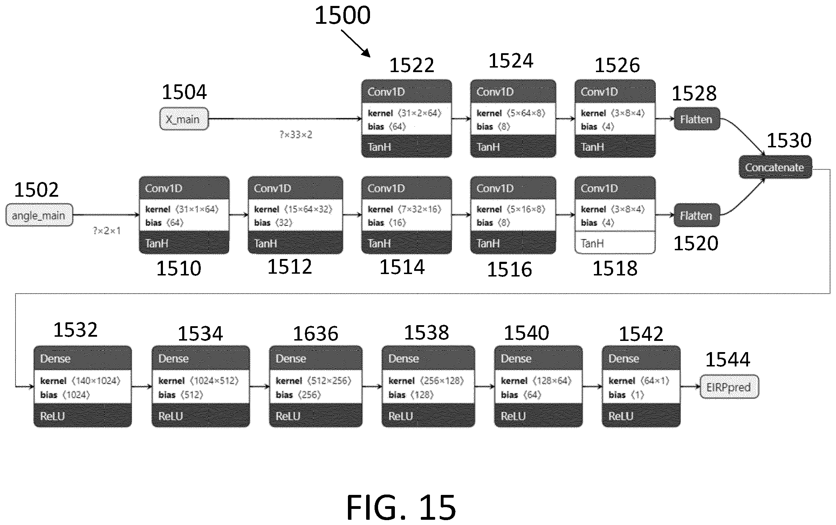

FIG. 15 shows an example structure of the neural network 1500 (the structure of the neural network may be implemented differently in other examples). The input parameters w, $\theta$, $\phi$ are reshaped into two main input variables *angle_main* (1502) and *X_main* (1504) to be fed into separate branches of the convolutional layers. The input parameter *angle_main* (1502) is the $1 \times 2$ vector. The input parameter *X_main* (1504) is of size 33 x 2. It includes in-phase and quadrature components of the complex weight vector of size 32x2 concatenated with *angle_main*. The input sequence *angle_main* (1502) goes through five one-dimensional convolutional layers (1510, 1512, 1514, 1516, 1518) as shown in FIG. 15. The specific number of filters used for the first 1510, second 1512, third 1514, fourth 1516 and fifth 1518 convolutional layer is 31, 15, 7, 5 and 3, respectively. The kernel size is 64, 32, 16, 8, and 4 respectively. The extracted features are then flattened (1520) into neurons of size 8.

The sequence *X_main* (1504) goes through three convolutional layers (1522, 1524, 1526). The specific number of filters used for the first (1522), second (1524), and third (1526) convolutional layer is 31, 5, and 3, respectively. The kernel size is 64, 8, and 4 respectively. The extracted features are flattened 1528 into neurons of size 132. Those 132 neurons are concatenated 1530 with the 8 neurons generated by processing from *angle_main* (1502). The concatenation is fed into a sequence of fully connected dense layers (1532, 1534, 1536, 1538, 1540, 1542) with kernel sizes 1024, 512, 256, 128, 64, and 1, respectively and then the final result is *EIRPpred* (1544) of size 1 to obtain an output. The network structures and corresponding output sizes and the number of parameters are summarized in Table 4, shown in FIG. 15. Table 4 shows architectural and training details. The entire convolutional neural network has 855577 parameters. The neural network size depends only on the number of elements of the array. For a weight vector size of 64 the neural network would have 1016649 elements if the same layers were used. The training has been executed on four GPUs with the batch size was 8192 per GPU using the multi-GPU training strategy. The Adam optimizer was used with minimum-square-loss in Tensorflow. The details of the specific layers, optimizations and loss functions could be found in www.tensorflow.org.

### d) Performance

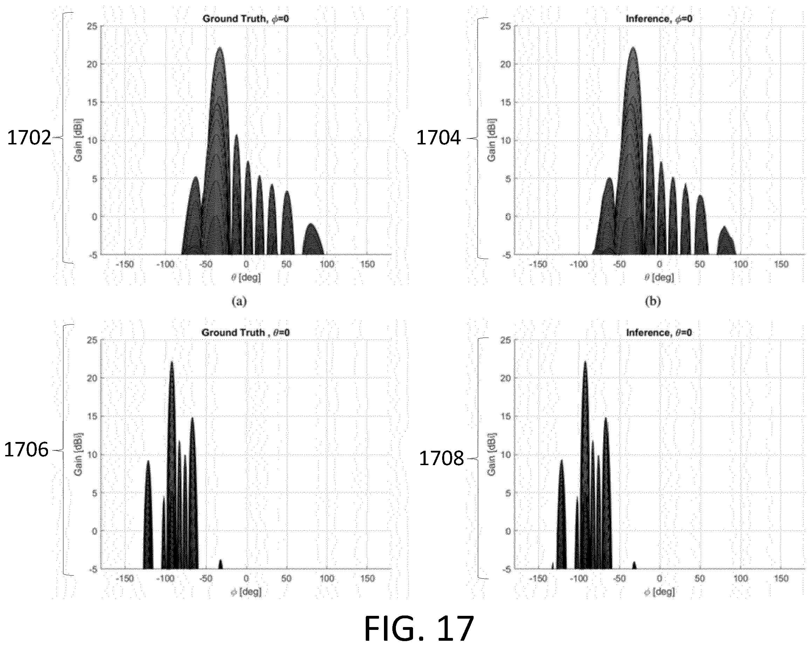

The performance was tested on 60 3D patterns which were not included in training or validation set. FIG. 17 shows horizontal and vertical cut comparison between the predicted and ground truth patterns for one of those 60 patterns. They show quite a good match. In particular, FIG. 17 shows a comparison between the predicted pattern (1704) and ground truth pattern (1702) for the horizontal cut for one of those 60 patterns, and a comparison between the predicted pattern (1708) and the ground truth pattern (1706) for the vertical cut for one of those 60 patterns.

The prediction error is referred to as the predicted values subtracted from the real values. Negative prediction error is more crucial since it may cause actual EIRP threshold values the defined by regulators to be exceeded. The performance in specific ranges is also of interest. Low prediction error at high antenna gain ranges is desired.

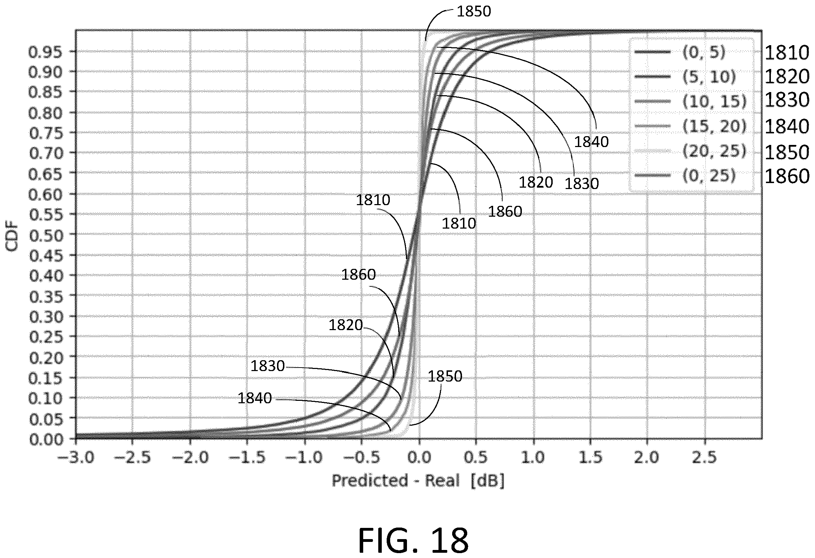

FIG. 18 shows real gain values subtracted from predicted gain values. In particular, FIG. 18 shows cumulative distribution functions (CDFs) of prediction error for various gain ranges, namely CDF 1810 for range (0, 5), CDF 1820 for range (5, 10), CDF 1830 for range (10, 15), CDF 1840 for range (15, 20), CDF 1850 for range (20, 25), and CDF 1860 for range (0, 25).

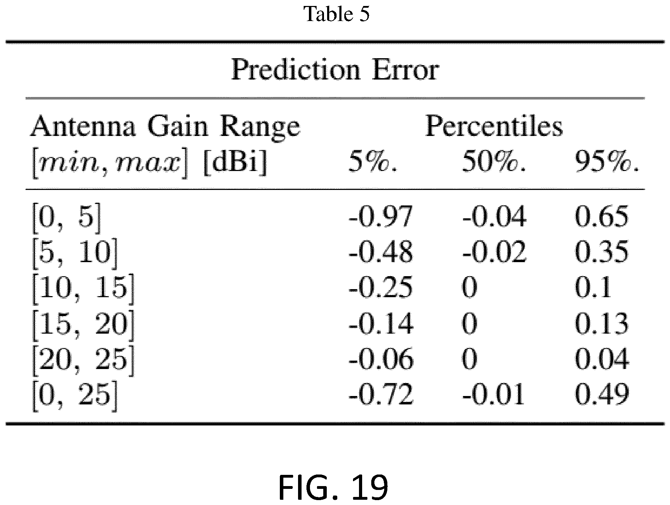

FIG. 19 shows Table 5. Table 5 shows the 5%, Median and 95% statistics extracted from those CDFs. Overall, all antenna gain values can be predicted within 0.72 dB at fifth percentile. At higher gain values the error diminishes, e.g. above 20 dB prediction error is within 0.06 dB at fifth percentile.

### e) ORAN use case

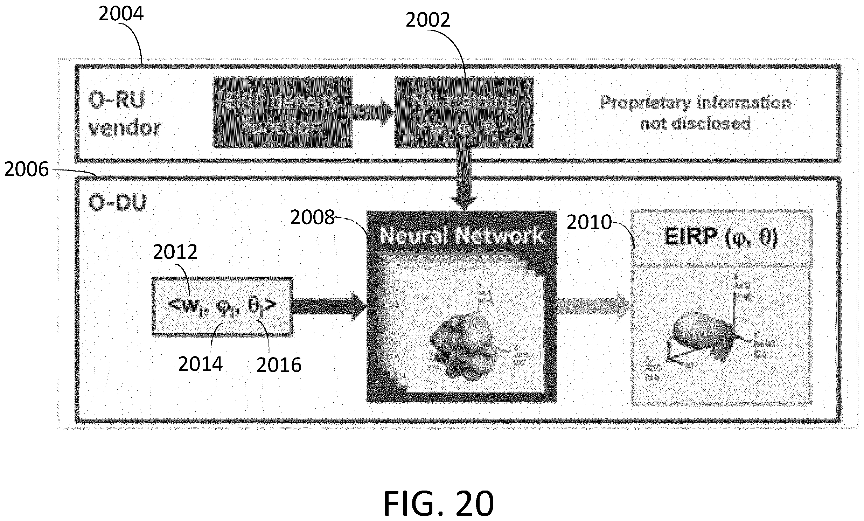

FIG. 20 shows an ORAN use case. The neural network training 2002 could be offloaded to the radio unit-vendor 2004 within the network. Thus, EIRP per segment in real-time without requiring specific confidential information from the antenna vendor could be computed. That is an enabler for ORAN where the O-RU 2004 and O-DU 2006 units are owned by different entities.

The objective is to allow the O-DU 2006 to implement actual EIRP calculation and control algorithms without knowing the detailed structure of the O-RU 2004. The herein described framework consists of following steps:

(1) O-RU vendor 2004 implements a neural network which is capable of inferring the EIRP 2010 for a given angular segment and weight vector; (2) The trained neural network 2008 is shared with the O-DU vendor 2006; (3) O-DU vendor 2006 determines for any weight vector 2012 and angular segment (2014, 2016) the EIRP 2010 (by for example using the shared neural network 2008).

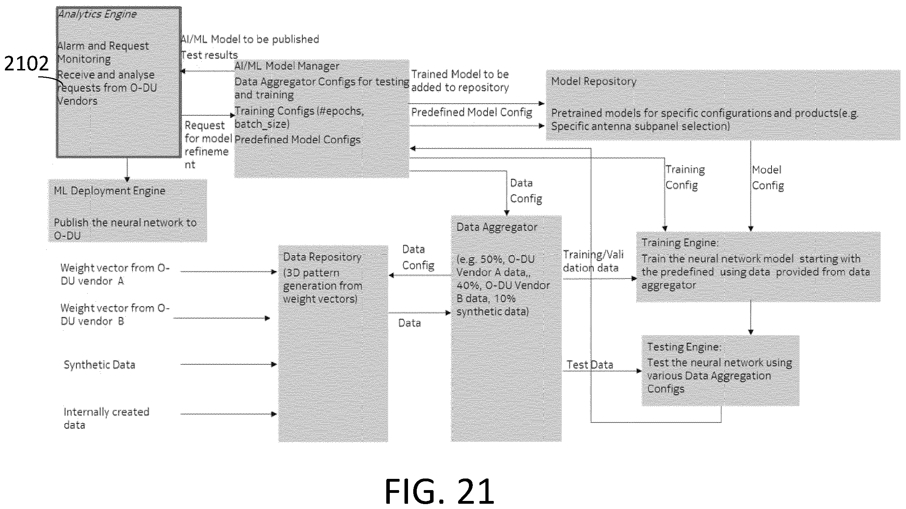

FIG. 21 shows O-RU vendor model refinement. In particular, FIG. 21 shows a possible embodiment for O-RU vendor model training. In this case, the O-RU vendor shares only the inference function with the O-DU vendor. O-DU vendor does not have any access to the 3D pattern generation function not to O-RU vendor confidential information. Therefore, only the O-RU vendor can train the neural network. Then, the O-DU may provide to O-RU vendor the weight vectors collected in field to aid the training data generation. The same O-RU unit may be supplied to various O-DU vendors. Therefore, O-RU vendor may have access to the training data from multiple O-DU's

O-DU may request O-RU vendor for new inference function and model refinement (refer to 2102). It may be because of abnormalities in performance, hardware or configuration changes.

The examples described herein may implement the actual max EIRP approach specified by IEC 62232 leveraging actual EIRP monitoring and control features for compliancy with the applicable standards and regulations about human RF EMF exposure. These features ensure that the configured actual maximum EIRP threshold is not exceeded during the base station operation. Actual EIRP monitoring and control features shall be compatible with each beam forming technique in 4G, 5G and in future 6G networks.

BF algorithms are continuously being improved for massive MIMO Base stations, in order to find an accurate algorithm for improving performance using a direction specific gain calculation. New BF features are including calculation of UE specific beams in real-time (e.g. sub-band SRS beamforming, EBB or ZF). Direct calculation of beam patterns directly from real-time is very processing capacity demanding. Therefore, these new real-time beam calculation algorithms are currently requiring that the interworking with the actual max approach is based on approximations, in particular in the use case involving multiple segments. These approximations may lead to unnecessary overestimation of the actual EIRP per segment.

The herein described neural network (NN) approach for beam calculation is an interesting and promising option to resolve this interworking issue since it is compatible with real-time calculation of beams and provides a more accurate assessment of the real-time EIRP per segment. The accuracy of the beam gain calculation, and consequently the actual EIRP, can be improved while the base station is operating using learning algorithms. This is important to take into account changes in software configuration (e.g. full panel mode vs. split mode), hardware changes (e.g. outage of TRx in antenna array) or installation parameters like mechanical/electrical down-tilt. The herein described NN based algorithms provide an advantage because they are compatible with coming BF features, ORAN deployments with 3rd party antenna vendors and for 6G.

NWDAF based training and/or inference may be implemented with the examples described herein.

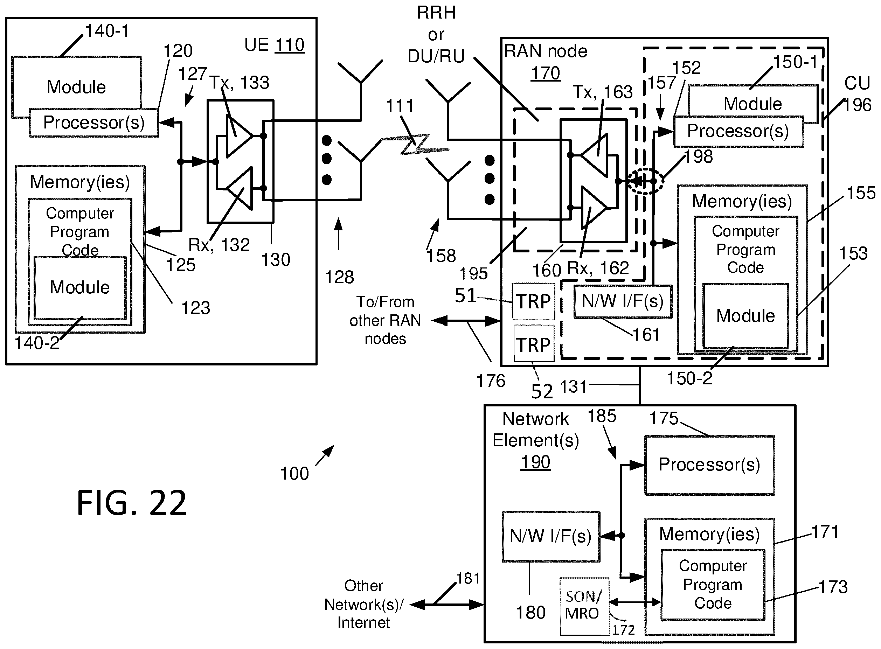

Turning to FIG. 22, this figure shows a block diagram of one possible and non-limiting example in which the examples may be practiced. A user equipment (UE) 110, radio access network (RAN) node 170, and network element(s) 190 are illustrated. In the example of FIG. 22, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, one or more memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A RAN node / gNB can comprise one or more TRPs to which the methods described herein may be applied. FIG. 22 shows that the RAN node 170 comprises TRP 51 and TRP 52, in addition to the TRP represented by transceiver 160. Similar to transceiver 160, TRP 51 and TRP 52 may each include a transmitter and a receiver. The RAN node 170 may host or comprise other TRPs not shown in FIG. 22.

A relay node in NR is called an integrated access and backhaul node. A mobile termination part of the IAB node facilitates the backhaul (parent link) connection. In other words, the mobile termination part comprises the functionality which carries UE functionalities. The distributed unit part of the IAB node facilitates the so called access link (child link) connections (i.e. for access link UEs, and backhaul for other IAB nodes, in the case of multi-hop IAB). In other words, the distributed unit part is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (mobility management entity)/SGW (serving gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. Computer program code 173 may include SON and/or MRO functionality 172.

The wireless network 100 may implement network virtualization, which is the process of combining hardware and software network resources and network functionality into a single, software-based administrative entity, or a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback devices having wireless communication capabilities, internet appliances including those permitting wireless internet access and browsing, tablets with wireless communication capabilities, head mounted displays such as those that implement virtual/augmented/mixed reality, as well as portable units or terminals that incorporate combinations of such functions. The UE 110 can also be a vehicle such as a car, or a UE mounted in a vehicle, a UAV such as e.g. a drone, or a UE mounted in a UAV. The user equipment 110 may be terminal device, such as mobile phone, mobile device, sensor device etc., the terminal device being a device used by the user or not used by the user.

UE 110, RAN node 170, and/or network element(s) 190, (and associated memories, computer program code and modules) may be configured to implement (e.g. in part) the methods described herein, including a method and apparatus for network integration, model refinement, data aggregation and augmentation for improved ML based EIRP prediction. Thus, computer program code 123, module 140-1, module 140-2, and other elements/features shown in FIG. 22 of UE 110 may implement user equipment related aspects of the examples described herein. Similarly, computer program code 153, module 150-1, module 150-2, and other elements/features shown in FIG. 22 of RAN node 170 may implement gNB/TRP related aspects of the examples described herein. Computer program code 173 and other elements/features shown in FIG. 22 of network element(s) 190 may be configured to implement network element related aspects of the examples described herein.

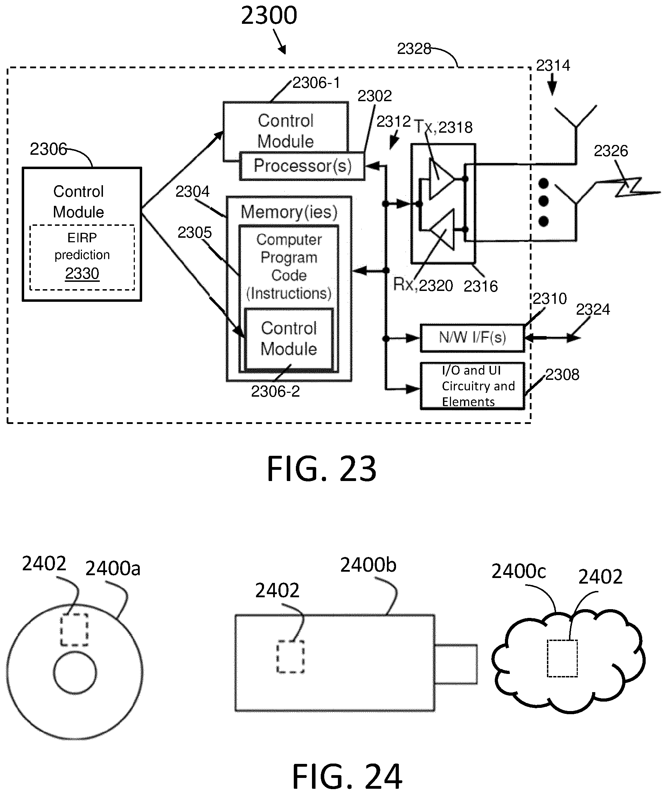

FIG. 23 is an example apparatus 2300, which may be implemented in hardware, configured to implement the examples described herein. The apparatus 2300 comprises at least one processor 2302 (e.g. an FPGA and/or CPU), one or more memories 2304 including computer program code 2305, the computer program code 2305 having instructions to carry out the methods described herein, wherein the at least one memory 2304 and the computer program code 2305 are configured to, with the at least one processor 2302, cause the apparatus 2300 to implement circuitry, a process, component, module, or function (implemented with control module 2306) to implement the examples described herein, including a method and apparatus for network integration, model refinement, data aggregation and augmentation for improved ML based EIRP prediction. The memory 2304 may be a non-transitory memory, a transitory memory, a volatile memory (e.g. RAM), or a non-volatile memory (e.g. ROM). Optionally included EIRP prediction 2330 of the control module implements the herein described aspects related to a method and apparatus for network integration, model refinement, data aggregation and augmentation for improved ML based EIRP prediction.

The apparatus 2300 includes a display and/or I/O interface 2308, which includes user interface (UI) circuitry and elements, that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 2300 includes one or more communication e.g. network (N/W) interfaces (I/F(s)) 2310. The communication I/F(s) 2310 may be wired and/or wireless and communicate over the Internet/other network(s) via any communication technique including via one or more links 2324. The link(s) 2324 may be the link(s) 131 and/or 176 from FIG. 22. The link(s) 131 and/or 176 from FIG. 22 may also be implemented using transceiver(s) 2316 and corresponding wireless link(s) 2326. The communication I/F(s) 2310 may comprise one or more transmitters or one or more receivers.

The transceiver 2316 comprises one or more transmitters 2318 and one or more receivers 2320. The transceiver 2316 and/or communication I/F(s) 2310 may comprise standard well-known components such as an amplifier, filter, frequency-converter, (de)modulator, and encoder/decoder circuitries and one or more antennas, such as antennas 2314 used for communication over wireless link 2326.

The control module 2306 of the apparatus 2300 comprises one of or both parts 2306-1 and/or 2306-2, which may be implemented in a number of ways. The control module 2306 may be implemented in hardware as control module 2306-1, such as being implemented as part of the one or more processors 2302. The control module 2306-1 may be implemented also as an integrated circuit or through other hardware such as a programmable gate array. In another example, the control module 2306 may be implemented as control module 2306-2, which is implemented as computer program code (having corresponding instructions) 2305 and is executed by the one or more processors 2302. For instance, the one or more memories 2304 store instructions that, when executed by the one or more processors 2302, cause the apparatus 2300 to perform one or more of the operations as described herein. Furthermore, the one or more processors 2302, the one or more memories 2304, and example algorithms (e.g., as flowcharts and/or signaling diagrams), encoded as instructions, programs, or code, are means for causing performance of the operations described herein.

The apparatus 2300 to implement the functionality of control 2306 may be UE 110, RAN node 170 (e.g. gNB 170), or network element(s) 190. Thus, processor 2302 may correspond to processor(s) 120, processor(s) 152 and/or processor(s) 175, memory 2304 may correspond to one or more memories 125, one or more memories 155 and/or one or more memories 171, computer program code 2305 may correspond to computer program code 123, computer program code 153, and/or computer program code 173, control module 2306 may correspond to module 140-1, module 140-2, module 150-1, and/or module 150-2, and communication I/F(s) 2310 and/or transceiver 2316 may correspond to transceiver 130, antenna(s) 128, transceiver 160, antenna(s) 158, N/W I/F(s) 161, and/or N/W I/F(s) 180. Alternatively, apparatus 2300 and its elements may not correspond to either of UE 110, RAN node 170, or network element(s) 190 and their respective elements, as apparatus 2300 may be part of a self-organizing/optimizing network (SON) node or other node, such as a node in a cloud.

Apparatus 2300 may also correspond to O-RU 2004, O-DU 2006, vendor 302, operator A 304, operator B 306, operator C 308, or any of the apparatuses described herein.

The apparatus 2300 may also be distributed throughout the network (e.g. 100) including within and between apparatus 2300 and any network element (such as a network control element (NCE) 190 and/or the RAN node 170 and/or UE 110).

Interface 2312 enables data communication and signaling between the various items of apparatus 2300, as shown in FIG. 23. For example, the interface 2312 may be one or more buses such as address, data, or control buses, and may include any interconnection mechanism, such as a series of lines on a motherboard or integrated circuit, fiber optics or other optical communication equipment, and the like. Computer program code (e.g. instructions) 2305, including control 2306 may comprise object-oriented software configured to pass data or messages between objects within computer program code 2305. The apparatus 2300 need not comprise each of the features mentioned, or may comprise other features as well. The various components of apparatus 2300 may at least partially reside in a common housing 2328, or a subset of the various components of apparatus 2300 may at least partially be located in different housings, which different housings may include housing 2328.

FIG. 24 shows a schematic representation of non-volatile memory media 2400a (e.g. computer/compact disc (CD) or digital versatile disc (DVD)) and 2400b (e.g. universal serial bus (USB) memory stick) and 2400c (e.g. cloud storage for downloading instructions and/or parameters 2402 or receiving emailed instructions and/or parameters 2402) storing instructions and/or parameters 2402 which when executed by a processor allows the processor to perform one or more of the steps of the methods described herein. Instructions and/or parameters 2402 may represent a non-transitory computer readable medium.

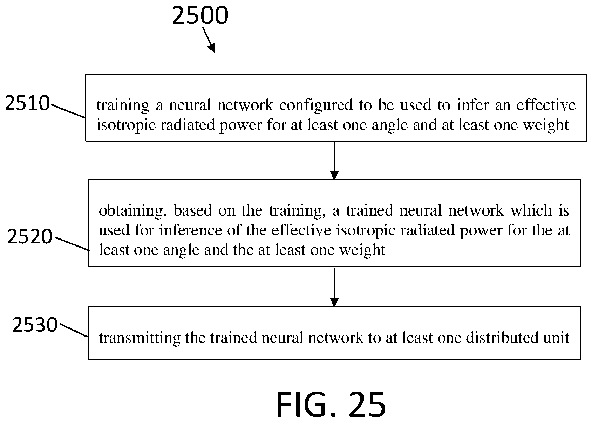

FIG. 25 is an example method 2500, based on the example embodiments described herein. At 2510, the method includes training a neural network configured to be used to infer an effective isotropic radiated power for at least one angle and at least one weight. At 2520, the method includes obtaining, based on the training, a trained neural network which is used for inference of the effective isotropic radiated power for the at least one angle and the at least one weight. At 2530, the method includes transmitting the trained neural network to at least one distributed unit. Method 2500 may be performed by vendor 302, O-RU vendor 2004, one or more network elements 190, or apparatus 2300.

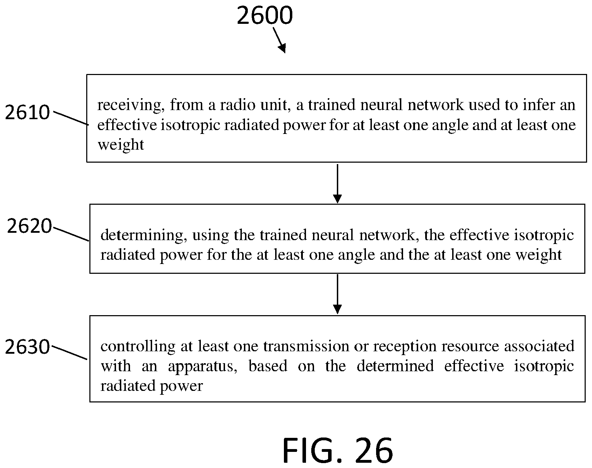

FIG. 26 is an example method 2600, based on the example embodiments described herein. At 2610, the method includes receiving, from a radio unit, a trained neural network used to infer an effective isotropic radiated power for at least one angle and at least one weight. At 2620, the method includes determining, using the trained neural network, the effective isotropic radiated power for the at least one angle and the at least one weight. At 2630, the method includes controlling at least one transmission or reception resource associated with an apparatus, based on the determined effective isotropic radiated power. Method 2600 may be performed by vendor 302, O-DU 2006, one or more network elements 190, or apparatus 2300.

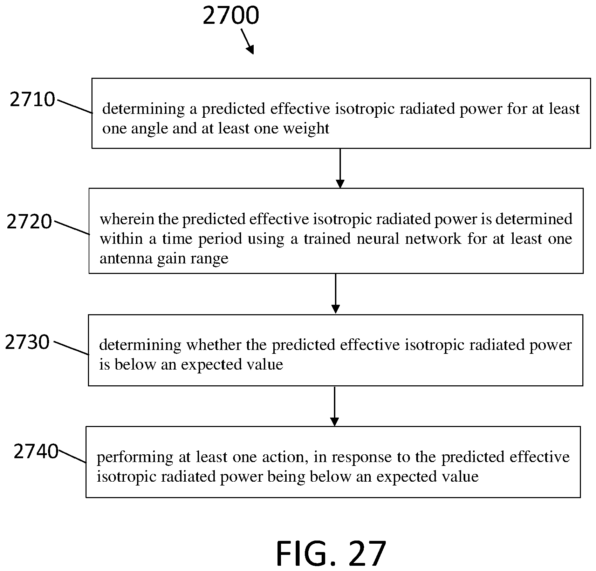

FIG. 27 is an example method 2700, based on the example embodiments described herein. At 2710, the method includes determining a predicted effective isotropic radiated power for at least one angle and at least one weight. A 2720, the method includes wherein the predicted effective isotropic radiated power is determined within a time period using a trained neural network for at least one antenna gain range. At 2730, the method includes determining whether the predicted effective isotropic radiated power is below an expected value. At 2740, the method includes performing at least one action, in response to the predicted effective isotropic radiated power being below an expected value. Method 2700 may be implemented by RAN node 170 (e.g. gNB 170) or apparatus 2300.

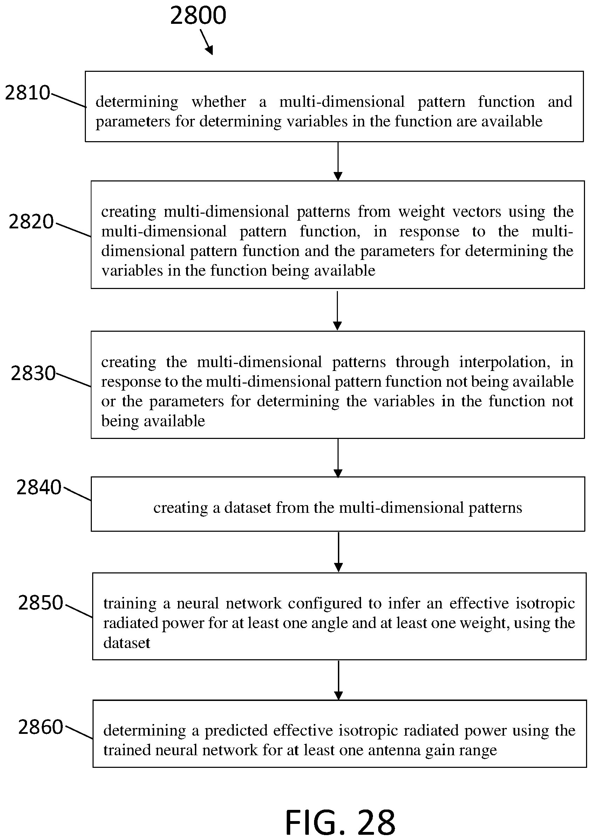

FIG. 28 is an example method 2800, based on the example embodiments described herein. At 2810, the method includes determining whether a multi-dimensional pattern function and parameters for determining variables in the function are available. At 2820, the method includes creating multi-dimensional patterns from weight vectors using the multi-dimensional pattern function, in response to the multi-dimensional pattern function and the parameters for determining the variables in the function being available. At 2830, the method includes creating the multi-dimensional patterns through interpolation, in response to the multi-dimensional pattern function not being available or the parameters for determining the variables in the function not being available. At 2840, the method includes creating a dataset from the multi-dimensional patterns. At 2850, the method includes training a neural network configured to infer an effective isotropic radiated power for at least one angle and at least one weight, using the dataset. At 2860, the method includes determining a predicted effective isotropic radiated power using the trained neural network for at least one antenna gain range. Method 2800 may be performed by vendor 302, O-RU 2004, RAN node 170, one or more network elements 190, operator A 304, operator B 306, operator C 308, or apparatus 2300.

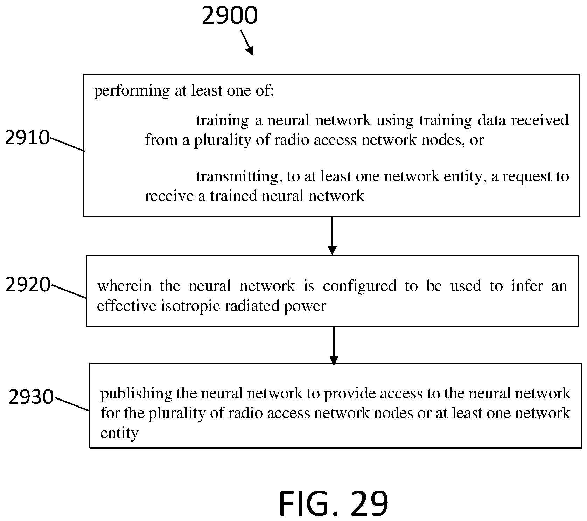

FIG. 29 is an example method 2900, based on the example embodiments described herein. At 2910, the method includes performing at least one of: training a neural network using training data received from a plurality of radio access network nodes, or transmitting, to at least one network entity, a request to receive a trained neural network. At 2920, the method includes wherein the neural network is configured to be used to infer an effective isotropic radiated power. At 2930, the method includes publishing the neural network to provide access to the neural network for the plurality of radio access network nodes or at least one network entity. Method 2900 may be performed by operator A 304, operator B 306, operator C 308, one or more network elements 190, or apparatus 2300.

The following examples are provided and described herein.

Example 1. An apparatus including: means for training a neural network configured to be used to infer an effective isotropic radiated power for at least one angle and at least one weight; means for obtaining, based on the training, a trained neural network which is used for inference of the effective isotropic radiated power for the at least one angle and the at least one weight; and means for transmitting the trained neural network to at least one distributed unit.

Example 2. The apparatus of example 1, wherein an entity associated with the at least one distributed unit does not have access to information associated with the training of the neural network, wherein the apparatus comprises a radio unit.

Example 3. The apparatus of any of examples 1 to 2, further including: means for receiving, from the at least one distributed unit, at least one weight vector configured to be used for the training of the neural network.

Example 4. The apparatus of any of examples 1 to 3, further including: means for receiving, from the at least one distributed unit, a request for an updated trained neural network, based on at least one of: a failure of a performance of the trained neural network to satisfy at least one criterion, a change in hardware associated with the at least one distributed unit, or a change in a configuration associated with the at least one distributed unit; means for updating the trained neural network by at least retraining the neural network; and means for transmitting, to the at least one distributed unit, the updated trained neural network.

Example 5. An apparatus including: means for receiving, from a radio unit, a trained neural network used to infer an effective isotropic radiated power for at least one angle and at least one weight; means for determining, using the trained neural network, the effective isotropic radiated power for the at least one angle and the at least one weight; and means for controlling at least one transmission or reception resource associated with the apparatus, based on the determined effective isotropic radiated power.

Example 6. The apparatus of example 5, wherein an entity associated with the apparatus does not have access to information associated with training of the neural network and determination of the trained neural network, wherein the apparatus comprises a distributed unit.

Example 7. The apparatus of any of examples 5 to 6, further including: means for transmitting, to the radio unit, at least one weight vector configured to be used with the radio unit for training of the neural network.

Example 8. The apparatus of any of examples 5 to 7, further including: means for transmitting, to the radio unit, a request for a updated trained neural network, based on at least one of: a failure of a performance of the inference function of the neural network to satisfy at least one criterion, a change in hardware associated with the apparatus, or a change in a configuration associated with the apparatus; and means for receiving, from the radio unit, the updated trained neural network.

Example 9. An apparatus including: means for determining a predicted effective isotropic radiated power for at least one angle and at least one weight; wherein the predicted effective isotropic radiated power is determined within a time period using a trained neural network for at least one antenna gain range; means for determining whether the predicted effective isotropic radiated power is below an expected value; and means for performing at least one action, in response to the predicted effective isotropic radiated power being below an expected value.

Example 10. The apparatus of example 9, further including: means for training an updated neural network, in response to the predicted effective isotropic radiated power being below the expected value, or means for transmitting, to an operator or radio unit, a request for an updated trained neural network, in response to the predicted effective isotropic radiated power being below the expected value, and receiving, from the operator or radio unit, the updated trained neural network.

Example 11. The apparatus of any of examples 9 to 10, further including: means for training the neural network used to determine the predicted effective isotropic radiated power.

Example 12. The apparatus of any of examples 9 to 11, further including: means for monitoring for at least one of: a change of a configuration of the apparatus, or a hardware failure of the apparatus; and means for performing at least one of: training an updated neural network, based on the change of the configuration of the apparatus, or the hardware failure of the apparatus, or transmitting, to an operator or radio unit, a request for an updated trained neural network, based on the change of the configuration of the apparatus, or the hardware failure of the apparatus.

Example 13. An apparatus including: means for determining whether a multi-dimensional pattern function and parameters for determining variables in the function are available; means for creating multi-dimensional patterns from weight vectors using the multi-dimensional pattern function, in response to the multi-dimensional pattern function and the parameters for determining the variables in the function being available; means for creating the multi-dimensional patterns through interpolation, in response to the multi-dimensional pattern function not being available or the parameters for determining the variables in the function not being available; means for creating a dataset from the multi-dimensional patterns; means for training a neural network configured to infer an effective isotropic radiated power for at least one angle and at least one weight, using the dataset; and means for determining a predicted effective isotropic radiated power using the trained neural network for at least one antenna gain range.

Example 14. The apparatus of example 13, wherein a multi-dimensional pattern of the multi-dimensional patterns comprises at least one weight of the neural network, at least one elevation angle, at least one azimuth angle, and a value of the effective isotropic radiated power.

Example 15. The apparatus of any of examples 13 to 14, wherein the weight vectors comprise at least one or more of: steering weight vectors, random weight vectors, weight vectors from radio access network node logs or simulations, or weight vectors from combinations of existing weight vectors.

Example 16. The apparatus of any of examples 13 to 15, further including: means for determining whether the predicted effective isotropic radiated power is below an expected value; means for adjusting the multi-dimensional patterns, in response to the predicted effective isotropic radiated power being below the expected value; wherein the multi-dimensional patterns are adjusted by performing at least one or more of: adjusting a total number of the multi-dimensional patterns, or adjusting a percentage of a number of the multi-dimensional patterns from a class; and means for retraining the neural network configured to infer the effective isotropic radiated power, using the adjusted multi-dimensional patterns.

Example 17. An apparatus including: means for performing at least one of: training a neural network using training data received from a plurality of radio access network nodes, or transmitting, to at least one network entity, a request to receive a trained neural network; wherein the neural network is configured to be used to infer an effective isotropic radiated power; and means for publishing the neural network to provide access to the neural network for the plurality of radio access network nodes or at least one network entity.

Example 18. The apparatus of example 17, further including: means for receiving training data from the plurality of radio access network nodes; means for training the neural network configured to be used to infer the effective isotropic radiated power, using the training data received from the plurality of radio access network nodes.

Example 19. The apparatus of any of examples 17 to 18, further including: means for subscribing to the at least one network entity for receiving the trained neural network; and means for receiving, from the at least one network entity, the trained neural network based on the subscription to the at least one network entity.

Example 20. The apparatus of any of examples 17 to 19, further including: means for performing at least one of: receiving, from the plurality of radio access network nodes, information related to a performance of a predicted effective isotropic radiated power using the neural network, or receiving, from at least one radio access network node, a request for an updated configuration of the neural network; and means for training an updated neural network, or transmitting to the at least one network entity a request to receive an updated trained neural network, based on the information related to the performance of the predicted effective isotropic radiated power using the neural network, or based on the request for the updated configuration of the neural network.

Example 21. An apparatus including: at least one processor; and at least one memory storing instructions that, when executed by the at least one processor, cause the apparatus at least to: train a neural network configured to be used to infer an effective isotropic radiated power for at least one angle and at least one weight; obtain, based on the training, a trained neural network which is used for inference of the effective isotropic radiated power for the at least one angle and the at least one weight; and transmit the trained neural network to at least one distributed unit.

Example 22. The apparatus of example 21, wherein an entity associated with the at least one distributed unit does not have access to information associated with the training of the neural network, wherein the apparatus comprises a radio unit.

Example 23. The apparatus of any of examples 21 to 22, wherein the instructions, when executed by the at least one processor, cause the apparatus at least to: receive, from the at least one distributed unit, at least one weight vector configured to be used for the training of the neural network.

Example 24. The apparatus of any of examples 21 to 23, wherein the instructions, when executed by the at least one processor, cause the apparatus at least to: receive, from the at least one distributed unit, a request for an updated trained neural network, based on at least one of: a failure of a performance of the trained neural network to satisfy at least one criterion, a change in hardware associated with the at least one distributed unit, or a change in a configuration associated with the at least one distributed unit; update the trained neural network by at least retraining the neural network; and transmit, to the at least one distributed unit, the updated trained neural network.

Example 25. An apparatus including: at least one processor; and at least one memory storing instructions that, when executed by the at least one processor, cause the apparatus at least to: receive, from a radio unit, a trained neural network used to infer an effective isotropic radiated power for at least one angle and at least one weight; determine, using the trained neural network, the effective isotropic radiated power for the at least one angle and the at least one weight; and control at least one transmission or reception resource associated with the apparatus, based on the determined effective isotropic radiated power.

Example 26. The apparatus of example 25, wherein an entity associated with the apparatus does not have access to information associated with training of the neural network and determination of the trained neural network, wherein the apparatus comprises a distributed unit.

Example 27. The apparatus of any of examples 25 to 26, wherein the instructions, when executed by the at least one processor, cause the apparatus at least to: transmit, to the radio unit, at least one weight vector configured to be used with the radio unit for training of the neural network.

Example 28. The apparatus of any of examples 25 to 27, wherein the instructions, when executed by the at least one processor, cause the apparatus at least to: transmit, to the radio unit, a request for a updated trained neural network, based on at least one of: a failure of a performance of the inference function of the neural network to satisfy at least one criterion, a change in hardware associated with the apparatus, or a change in a configuration associated with the apparatus; and receive, from the radio unit, the updated trained neural network.

Example 29. An apparatus including: at least one processor; and at least one memory storing instructions that, when executed by the at least one processor, cause the apparatus at least to: determine a predicted effective isotropic radiated power for at least one angle and at least one weight; wherein the predicted effective isotropic radiated power is determined within a time period using a trained neural network for at least one antenna gain range; determine whether the predicted effective isotropic radiated power is below an expected value; and perform at least one action, in response to the predicted effective isotropic radiated power being below an expected value.

Example 30. The apparatus of example 29, wherein the instructions, when executed by the at least one processor, cause the apparatus at least to perform at least one of: train an updated neural network, in response to the predicted effective isotropic radiated power being below the expected value, or transmit, to an operator or radio unit, a request for an updated trained neural network, in response to the predicted effective isotropic radiated power being below the expected value, and receive, from the operator or radio unit, the updated trained neural network.

Example 31. The apparatus of any of examples 29 to 30, wherein the instructions, when executed by the at least one processor, cause the apparatus at least to: train the neural network used to determine the predicted effective isotropic radiated power.

Example 32. The apparatus of any of examples 29 to 31, wherein the instructions, when executed by the at least one processor, cause the apparatus at least to: monitor for at least one of: a change of a configuration of the apparatus, or a hardware failure of the apparatus; and perform at least one of: train an updated neural network, based on the change of the configuration of the apparatus, or the hardware failure of the apparatus, or transmit, to an operator or radio unit, a request for an updated trained neural network, based on the change of the configuration of the apparatus, or the hardware failure of the apparatus.

Example 33. An apparatus including: at least one processor; and at least one memory storing instructions that, when executed by the at least one processor, cause the apparatus at least to: determine whether a multi -dimensional pattern function and parameters for determining variables in the function are available; create multi-dimensional patterns from weight vectors using the multi-dimensional pattern function, in response to the multi-dimensional pattern function and the parameters for determining the variables in the function being available; create the multi-dimensional patterns through interpolation, in response to the multi-dimensional pattern function not being available or the parameters for determining the variables in the function not being available; create a dataset from the multi-dimensional patterns; train a neural network configured to infer an effective isotropic radiated power for at least one angle and at least one weight, using the dataset; and determine a predicted effective isotropic radiated power using the trained neural network for at least one antenna gain range.

Example 34. The apparatus of example 33, wherein a multi-dimensional pattern of the multi-dimensional patterns comprises at least one weight of the neural network, at least one elevation angle, at least one azimuth angle, and a value of the effective isotropic radiated power.

Example 35. The apparatus of any of examples 33 to 34, wherein the weight vectors comprise at least one or more of: steering weight vectors, random weight vectors, weight vectors from radio access network node logs or simulations, or weight vectors from combinations of existing weight vectors.

Example 36. The apparatus of any of examples 33 to 35, wherein the instructions, when executed by the at least one processor, cause the apparatus at least to: determine whether the predicted effective isotropic radiated power is below an expected value; adjust the multi-dimensional patterns, in response to the predicted effective isotropic radiated power being below the expected value; wherein the multi-dimensional patterns are adjusted by performing at least one or more of: adjusting a total number of the multi-dimensional patterns, or adjusting a percentage of a number of the multi-dimensional patterns from a class; and retrain the neural network configured to infer the effective isotropic radiated power, using the adjusted multi-dimensional patterns.

Example 37. An apparatus including: at least one processor; and at least one memory storing instructions that, when executed by the at least one processor, cause the apparatus at least to: perform at least one of: train a neural network using training data received from a plurality of radio access network nodes, or transmit, to at least one network entity, a request to receive a trained neural network; wherein the neural network is configured to be used to infer an effective isotropic radiated power; and publish the neural network to provide access to the neural network for the plurality of radio access network nodes or at least one network entity.

Example 38. The apparatus of example 37, wherein the instructions, when executed by the at least one processor, cause the apparatus at least to: receive training data from the plurality of radio access network nodes; train the neural network configured to be used to infer the effective isotropic radiated power, using the training data received from the plurality of radio access network nodes.

Example 39. The apparatus of any of examples 37 to 38, wherein the instructions, when executed by the at least one processor, cause the apparatus at least to: subscribe to the at least one network entity for receiving the trained neural network; and receive, from the at least one network entity, the trained neural network based on the subscription to the at least one network entity.

Example 40. The apparatus of any of examples 37 to 39, wherein the instructions, when executed by the at least one processor, cause the apparatus at least to: perform at least one of: receive, from the plurality of radio access network nodes, information related to a performance of a predicted effective isotropic radiated power using the neural network, or receive, from at least one radio access network node, a request for an updated configuration of the neural network; and train an updated neural network, or transmit to the at least one network entity a request to receive an updated trained neural network, based on the information related to the performance of the predicted effective isotropic radiated power using the neural network, or based on the request for the updated configuration of the neural network.

Example 41. A method including: training a neural network configured to be used to infer an effective isotropic radiated power for at least one angle and at least one weight; obtaining, based on the training, a trained neural network which is used for inference of the effective isotropic radiated power for the at least one angle and the at least one weight; and transmitting the trained neural network to at least one distributed unit.

Example 42. A method including: receiving, from a radio unit, a trained neural network used to infer an effective isotropic radiated power for at least one angle and at least one weight; determining, using the trained neural network, the effective isotropic radiated power for the at least one angle and the at least one weight; and controlling at least one transmission or reception resource associated with an apparatus, based on the determined effective isotropic radiated power.

Example 43. A method including: determining a predicted effective isotropic radiated power for at least one angle and at least one weight; wherein the predicted effective isotropic radiated power is determined within a time period using a trained neural network for at least one antenna gain range; determining whether the predicted effective isotropic radiated power is below an expected value; and performing at least one action, in response to the predicted effective isotropic radiated power being below an expected value.

Example 44. A method including: determining whether a multi-dimensional pattern function and parameters for determining variables in the function are available; creating multi-dimensional patterns from weight vectors using the multi-dimensional pattern function, in response to the multi-dimensional pattern function and the parameters for determining the variables in the function being available; creating the multi-dimensional patterns through interpolation, in response to the multi-dimensional pattern function not being available or the parameters for determining the variables in the function not being available; creating a dataset from the multi-dimensional patterns; training a neural network configured to infer an effective isotropic radiated power for at least one angle and at least one weight, using the dataset; and determining a predicted effective isotropic radiated power using the trained neural network for at least one antenna gain range.

Example 45. A method including: performing at least one of: training a neural network using training data received from a plurality of radio access network nodes, or transmitting, to at least one network entity, a request to receive a trained neural network; wherein the neural network is configured to be used to infer an effective isotropic radiated power; and publishing the neural network to provide access to the neural network for the plurality of radio access network nodes or at least one network entity.

Example 46. A non-transitory computer readable medium including program instructions stored thereon for performing at least the following: training a neural network configured to be used to infer an effective isotropic radiated power for at least one angle and at least one weight; obtaining, based on the training, a trained neural network which is used for inference of the effective isotropic radiated power for the at least one angle and the at least one weight; and transmitting the trained neural network to at least one distributed unit.

Example 47. A non-transitory computer readable medium including program instructions stored thereon for performing at least the following: receiving, from a radio unit, a trained neural network used to infer an effective isotropic radiated power for at least one angle and at least one weight; determining, using the trained neural network, the effective isotropic radiated power for the at least one angle and the at least one weight; and controlling at least one transmission or reception resource associated with an apparatus, based on the determined effective isotropic radiated power.

Example 48. A non-transitory computer readable medium including program instructions stored thereon for performing at least the following: determining a predicted effective isotropic radiated power for at least one angle and at least one weight; wherein the predicted effective isotropic radiated power is determined within a time period using a trained neural network for at least one antenna gain range; determining whether the predicted effective isotropic radiated power is below an expected value; and performing at least one action, in response to the predicted effective isotropic radiated power being below an expected value.

Example 49. A non-transitory computer readable medium including program instructions stored thereon for performing at least the following: determining whether a multi-dimensional pattern function and parameters for determining variables in the function are available; creating multi-dimensional patterns from weight vectors using the multi-dimensional pattern function, in response to the multi-dimensional pattern function and the parameters for determining the variables in the function being available; creating the multi-dimensional patterns through interpolation, in response to the multi-dimensional pattern function not being available or the parameters for determining the variables in the function not being available; creating a dataset from the multi-dimensional patterns; training a neural network configured to infer an effective isotropic radiated power for at least one angle and at least one weight, using the dataset; and determining a predicted effective isotropic radiated power using the trained neural network for at least one antenna gain range.

Example 50. A non-transitory computer readable medium including program instructions stored thereon for performing at least the following: performing at least one of: training a neural network using training data received from a plurality of radio access network nodes, or transmitting, to at least one network entity, a request to receive a trained neural network; wherein the neural network is configured to be used to infer an effective isotropic radiated power; and publishing the neural network to provide access to the neural network for the plurality of radio access network nodes or at least one network entity.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memories as described herein may be implemented using any suitable data storage technology, such as semiconductor based memory devices, flash memory, magnetic memory devices and systems, optical memory devices and systems, non-transitory memory, transitory memory, fixed memory and removable memory. The memories may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memories that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The following acronyms and abbreviations that may be found in the specification and/or the drawing figures are given as follows (the abbreviations and acronyms may be appended with each other or with other characters using e.g. a dash, hyphen, slash, or number, and may be case insensitive):

1d        one dimensional
3D       three dimensional

| 3GPP | third generation partnership project |
|------|--------------------------------------|
| 4G | fourth generation |
| 5G | fifth generation |
| 5GC | 5G core network |
| 5GS | 5G system |
| 6G | sixth generation |
| ADRF | analytics data repository function |
| AI | artificial intelligence |
| AF | application function |
| AMF | access and mobility management function |
| ASIC | application-specific integrated circuit |
| BASTA | base station antenna standard |
| BF | beamforming |
| BS | base station |
| CD | compact/computer disc |
| CDF | cumulative distribution function |
| Config | configuration |
| Conv | convolution |
| CPU | central processing unit |
| CSP | communications service provider |
| CU | central unit or centralized unit |
| DCCF | data collection coordination function |
| DSP | digital signal processor |
| DU | distributed unit |
| DVD | digital versatile disc |
| EBB | eigen mode based beamforming |
| EIRP | equivalent isotropic radiated power, or effective isotropic radiated power |
| EMF | electromagnetic field |
| eNB | evolved Node B (e.g., an LTE base station) |
| EN-DC | E-UTRAN new radio - dual connectivity |
| en-gNB | node providing NR user plane and control plane protocol terminations towards the UE, and acting as a secondary node in EN-DC |
| E-UTRA | evolved universal terrestrial radio access, i.e., the LTE radio access technology |
| E-UTRAN | E-UTRA network |
| F1 | interface between the CU and the DU |
| FPGA | field-programmable gate array |
| gNB | base station for 5G/NR, i.e., a node providing NR user plane and control plane protocol terminations towards the UE, and connected via the NG interface to the 5GC |
| GPU | graphics processing unit |
| HW | hardware |
| IAB | integrated access and backhaul |
| ID | identifier |
| IEC | International Electrotechnical Commission |
| I/F | interface |
| I/O | input/output |
| KPI | key performance indicator |
| LCS | location services |
| LMF | location management function |
| LTE | long term evolution (4G) |
| MAC | medium access control |
| MFAF | messaging framework adaptor function |
| MIMO | multiple input multiple output |
| ML | machine learning |
| MME | mobility management entity |
| mMIMO | massive MIMO |
| MRO | mobility robustness optimization |
| MSE | mean squared error |
| MSI | Microsoft Software Installer |

| | |
|---|---|
| NCE | network control element |
| NEF | network exposure function |
| NF | network function |
| ng or NG | new generation |
| ng-eNB | new generation eNB |
| NGMN | Next Generation Mobile Networks |
| NG-RAN | new generation radio access network |
| NN | neural network |
| NR | new radio |
| NRF | network repository function |
| NSACF | network slice access control function |
| N/W | network |
| NWDAF | network data analytics function |
| OAM | operations, administration, maintenance |
| O-DU | ORAN distributed unit |
| ORAN | open radio access network |
| O-RU | ORAN radio unit |
| PBCH | physical broadcast channel |
| PCF | policy control function |
| PDA | personal digital assistant |
| PDCP | packet data convergence protocol |
| PHY | physical layer |
| PMI | precoding matrix indicator |
| PRB | physical resource block |
| Pub | publish or publishing |
| RAM | random access memory |
| RAN | radio access network |
| ReLU | rectified linear unit |
| RF | radio frequency |
| RLC | radio link control |
| ROM | read-only memory |
| RRC | radio resource control |
| RU | radio unit |
| Rx | receiver or reception |
| SAR | specific absorption rate |
| SDAP | service data adaptation protocol |
| SGW | serving gateway |
| SMF | session management function |
| SON | self-organizing/optimizing network |
| SRS | sounding reference signal |
| SS | synchronization signal |
| SSB | synchronization signal and PBCH block, or synchronization signal block |
| Sub | subscribe or subscribing |
| TANH | hyperbolic tangent function |
| TRP | transmission reception point |
| TRx | transmission reception |
| TS | technical specification |
| Tx, TX | transmitter or transmission |
| UAV | unmanned aerial vehicle |
| UDM | unified data management |
| UDR | unified data repository |
| UE | user equipment (e.g., a wireless, typically mobile device) |
| UI | user interface |
| UPF | user plane function |
| USB | universal serial bus |
| V | version |
| X2 | network interface between RAN nodes and between RAN and the core network |
| Xn | network interface between NG-RAN nodes |

ZF    zero force

**Claims**

1.  An apparatus comprising:

    means for training a neural network configured to be used to infer an effective isotropic radiated power for at least one angle and at least one weight;
    means for obtaining, based on the training, a trained neural network which is used for inference of the effective isotropic radiated power for the at least one angle and the at least one weight; and
    means for transmitting the trained neural network to at least one distributed unit.

2.  The apparatus of claim 1, wherein an entity associated with the at least one distributed unit does not have access to information associated with the training of the neural network, wherein the apparatus comprises a radio unit.

3.  The apparatus of any of claims 1 to 2, further comprising:
    means for receiving, from the at least one distributed unit, at least one weight vector configured to be used for the training of the neural network.

4.  The apparatus of any of claims 1 to 3, further comprising:

    means for receiving, from the at least one distributed unit, a request for an updated trained neural network, based on at least one of: a failure of a performance of the trained neural network to satisfy at least one criterion, a change in hardware associated with the at least one distributed unit, or a change in a configuration associated with the at least one distributed unit;
    means for updating the trained neural network by at least retraining the neural network; and
    means for transmitting, to the at least one distributed unit, the updated trained neural network.

5.  An apparatus comprising:

    means for receiving, from a radio unit, a trained neural network used to infer an effective isotropic radiated power for at least one angle and at least one weight;
    means for determining, using the trained neural network, the effective isotropic radiated power for the at least one angle and the at least one weight; and
    means for controlling at least one transmission or reception resource associated with the apparatus, based on the determined effective isotropic radiated power.

6.  The apparatus of claim 5, wherein an entity associated with the apparatus does not have access to information associated with training of the neural network and determination of the trained neural network, wherein the apparatus comprises a distributed unit.

7.  The apparatus of any of claims 5 to 6, further comprising:
    means for transmitting, to the radio unit, at least one weight vector configured to be used with the radio unit for training of the neural network.

8.  The apparatus of any of claims 5 to 7, further comprising:

    means for transmitting, to the radio unit, a request for a updated trained neural network, based on at least one of: a failure of a performance of the inference function of the neural network to satisfy at least one criterion, a change in hardware associated with the apparatus, or a change in a configuration associated with the apparatus; and
    means for receiving, from the radio unit, the updated trained neural network.

9.  An apparatus comprising:

    means for determining a predicted effective isotropic radiated power for at least one angle and at least one weight;
    wherein the predicted effective isotropic radiated power is determined within a time period using a trained neural network for at least one antenna gain range;
    means for determining whether the predicted effective isotropic radiated power is below an expected value; and

means for performing at least one action, in response to the predicted effective isotropic radiated power being below an expected value.

10. The apparatus of claim 9, further comprising:

means for training an updated neural network, in response to the predicted effective isotropic radiated power being below the expected value, or

means for transmitting, to an operator or radio unit, a request for an updated trained neural network, in response to the predicted effective isotropic radiated power being below the expected value, and receiving, from the operator or radio unit, the updated trained neural network.

11. The apparatus of any of claims 9 to 10, further comprising:
means for training the neural network used to determine the predicted effective isotropic radiated power.

12. The apparatus of any of claims 9 to 11, further comprising:

means for monitoring for at least one of: a change of a configuration of the apparatus, or a hardware failure of the apparatus; and

means for performing at least one of:

training an updated neural network, based on the change of the configuration of the apparatus, or the hardware failure of the apparatus, or

transmitting, to an operator or radio unit, a request for an updated trained neural network, based on the change of the configuration of the apparatus, or the hardware failure of the apparatus.

13. An apparatus comprising:

means for determining whether a multi-dimensional pattern function and parameters for determining variables in the function are available;

means for creating multi-dimensional patterns from weight vectors using the multi-dimensional pattern function, in response to the multi-dimensional pattern function and the parameters for determining the variables in the function being available;

means for creating the multi-dimensional patterns through interpolation, in response to the multi-dimensional pattern function not being available or the parameters for determining the variables in the function not being available;

means for creating a dataset from the multi-dimensional patterns;

means for training a neural network configured to infer an effective isotropic radiated power for at least one angle and at least one weight, using the dataset; and

means for determining a predicted effective isotropic radiated power using the trained neural network for at least one antenna gain range.

14. The apparatus of claim 13, wherein a multi-dimensional pattern of the multi-dimensional patterns comprises at least one weight of the neural network, at least one elevation angle, at least one azimuth angle, and a value of the effective isotropic radiated power.

15. The apparatus of any of claims 13 to 14, wherein the weight vectors comprise at least one or more of: steering weight vectors, random weight vectors, weight vectors from radio access network node logs or simulations, or weight vectors from combinations of existing weight vectors.

16. The apparatus of any of claims 13 to 15, further comprising:

means for determining whether the predicted effective isotropic radiated power is below an expected value;

means for adjusting the multi-dimensional patterns, in response to the predicted effective isotropic radiated power being below the expected value;

wherein the multi-dimensional patterns are adjusted by performing at least one or more of: adjusting a total number of the multi-dimensional patterns, or adjusting a percentage of a number of the multi-dimensional patterns from a class; and

means for retraining the neural network configured to infer the effective isotropic radiated power, using the adjusted multi-dimensional patterns.

17. An apparatus comprising:

means for performing at least one of:

training a neural network using training data received from a plurality of radio access network nodes, or transmitting, to at least one network entity, a request to receive a trained neural network;

wherein the neural network is configured to be used to infer an effective isotropic radiated power; and means for publishing the neural network to provide access to the neural network for the plurality of radio access network nodes or at least one network entity.

18. The apparatus of claim 17, further comprising:

means for receiving training data from the plurality of radio access network nodes; means for training the neural network configured to be used to infer the effective isotropic radiated power, using the training data received from the plurality of radio access network nodes.

19. The apparatus of any of claims 17 to 18, further comprising:

means for subscribing to the at least one network entity for receiving the trained neural network; and means for receiving, from the at least one network entity, the trained neural network based on the subscription to the at least one network entity.

20. The apparatus of any of claims 17 to 19, further comprising:

means for performing at least one of:

receiving, from the plurality of radio access network nodes, information related to a performance of a predicted effective isotropic radiated power using the neural network, or receiving, from at least one radio access network node, a request for an updated configuration of the neural network; and

means for training an updated neural network, or transmitting to the at least one network entity a request to receive an updated trained neural network, based on the information related to the performance of the predicted effective isotropic radiated power using the neural network, or based on the request for the updated configuration of the neural network.

FIG. 1

FIG. 2

202 — ML based EIRP estimation

204 — EIRP control procedure

FIG. 3

FIG. 4

FIG. 5

FIG. 6

**FIG. 7**

701 — Alarm and Request Monitoring Layer:

Ignite KPI monitoring Alarm and report

Test models in model repository to improve the performance

Ignite model refinement on the new data taking into account hardware errors and/or configuration changes.

Required EIRP Predicition performance thresholds and reliability ranges

702 704 — Compute EIRP at given ranges for the last \Delta t

Determine the EIRP ranges and directions where prediction performance exceeded a threshold

Create an alarm to reduce power in those directions if the prediction error is negative otherwise increase power

Label the weight vectors with erroneous weight vector prediction.

Performance KPIs, labeled data

712 — Performance Below expectations

yes

714 — Periodic /On demand monitoring/checking of configuration changes and HW failures.

EP 4 542 465 A1

808

Alarm and Request Monitoring Layer:

Ignite KPI monitoring Alarm and report

Share the recent data

Request for new model

Compute EIRP at given ranges for the last \Delta t

Determine the EIRP ranges and directions where prediction performance exceeded a threshold

Create an alarm to reduce power in those directions if the prediction error is negative otherwise increase power

Label the weight vectors with erroneous weight vector prediction.

Performance KPIs, labeled data. HW and configuration status    806

804

Periodic /On demand monitoring/checking of configuration changes and HW failures.

yes    Performance KPIs, labeled data

802

Performance Below expectations

FIG. 8

FIG. 9

FIG. 10

Table 3 – Performance Comparison

| Antenna Gain Range [min, max] [dBi] | Prediction Error (with random) | | | Prediction Error (without random) | | |
|---|---|---|---|---|---|---|
| | Percentiles | | | Percentiles | | |
| | 5%. | 50%. | 95%. | 5%. | 50%. | 95%. |
| [0, 5] | -0.97 | -0.04 | 0.65 | -2.12 | -0.02 | 0.99 |
| [5, 10] | -0.48 | -0.02 | 0.35 | -0.96 | 0 | 0.54 |
| [10, 15] | -0.25 | 0 | 0.1 | -0.54 | 0.01 | 0.34 |
| [15, 20] | -0.14 | 0 | 0.13 | -0.38 | 0 | 0.21 |
| [20, 25] | -0.06 | 0 | 0.04 | -0.15 | 0.01 | 0.09 |
| [0, 25] | -0.72 | -0.01 | 0.49 | -1.47 | -0.01 | 0.78 |

FIG. 11

FIG. 12

FIG. 13

1310

1402 **w**

1404 $\theta$

1406 $\phi$

Neural network

1410

EIRP at azimuth $\theta$ and elevation $\phi$

FIG. 14

FIG. 15

1500

1502 angle_main

7×2×1

1510 Conv1D — kernel ⟨31×1×64⟩ bias ⟨64⟩ — TanH

1512 Conv1D — kernel ⟨15×64×32⟩ bias ⟨32⟩ — TanH

1514 Conv1D — kernel ⟨7×32×16⟩ bias ⟨16⟩ — TanH

1516 Conv1D — kernel ⟨5×16×8⟩ bias ⟨8⟩ — TanH

1518 Conv1D — kernel ⟨3×8×4⟩ bias ⟨4⟩ — TanH

1520 Flatten

1504 X_main

7×33×2

1522 Conv1D — kernel ⟨31×2×64⟩ bias ⟨64⟩ — TanH

1524 Conv1D — kernel ⟨5×64×8⟩ bias ⟨8⟩ — TanH

1526 Conv1D — kernel ⟨3×8×4⟩ bias ⟨4⟩ — TanH

1528 Flatten

1530 Concatenate

1532 Dense — kernel ⟨140×1024⟩ bias ⟨1024⟩ — ReLU

1534 Dense — kernel ⟨1024×512⟩ bias ⟨512⟩ — ReLU

1636 Dense — kernel ⟨512×256⟩ bias ⟨256⟩ — ReLU

1538 Dense — kernel ⟨256×128⟩ bias ⟨128⟩ — ReLU

1540 Dense — kernel ⟨128×64⟩ bias ⟨64⟩ — ReLU

1542 Dense — kernel ⟨64×1⟩ bias ⟨1⟩ — ReLU

1544 EIRP_pred

| Architecture | | | | |
|---|---|---|---|---|
| Name | Type | Connected to | Shape | Number of Parameters |
| angle_main | Input Layer | Input | ( 2, 1) | 0 |
| conv1d_6 | Conv1D | angle_main | ( 2, 64) | 2048 |
| X_main | Input Layer | Input | ( 33, 2) | 0 |
| conv1d_7 | Conv1D | conv1d_6 | ( 2, 32) | 30752 |
| conv1d_3 | Conv1D | X_main | (33, 64) | 4032 |
| conv1d_8 | Conv1D | conv1d_7 | ( 2, 16) | 3600 |
| conv1d_4 | Conv1D | conv1d_3 | ( 33, 8) | 2568 |
| conv1d_9 | Conv1D | conv1d_8 | (2, 8) | 648 |
| conv1d_5 | Conv1D | conv1d_4 | (33, 4) | 100 |
| conv1d_10 | Conv1D | conv1d_9 | ( 2, 4) | 100 |
| flatten | Flatten | conv1d_5 | (132) | 0 |
| flatten_1 | Flatten | conv1d_10 | ( 8) | 0 |
| concatenate | Concatenate | flatten and flatten_1 | (140) | 0 |
| dense | Dense | concatenate | (1024) | 144384.0 |
| dense_1 | Dense | dense | (512) | 524800 |
| dense_2 | Dense | dense_1 | (256) | 131328 |
| dense_3 | Dense | dense_2 | (128) | 32896 |
| dense_4 | Dense | dense_3 | ( 64) | 8256 |
| EIRPpred | Dense | dense_4 | ( 1) | 65 |
| Total Number of trainable Parameters | | | 885,577 | |

| Training | |
|---|---|
| Batch size | 8192 per GPU (4 GPUs) |
| Learning rate | 0.001 |
| Optimiser | Adam |
| Loss | MSE |

FIG. 16

FIG. 17

FIG. 18

EP 4 542 465 A1

Table 5

## Prediction Error

| Antenna Gain Range | Percentiles | | |
|---|---|---|---|
| $[min, max]$ [dBi] | 5%. | 50%. | 95%. |
| [0, 5] | -0.97 | -0.04 | 0.65 |
| [5, 10] | -0.48 | -0.02 | 0.35 |
| [10, 15] | -0.25 | 0 | 0.1 |
| [15, 20] | -0.14 | 0 | 0.13 |
| [20, 25] | -0.06 | 0 | 0.04 |
| [0, 25] | -0.72 | -0.01 | 0.49 |

# FIG. 19

FIG. 20

EP 4 542 465 A1

Figure contents:

**Analytics Engine**

Alarm and Request Monitoring
Receive and analyse requests from O-DU Vendors

2102

**ML Deployment Engine**

Publish the neural network to O-DU

Weight vector from O-DU vendor A

Weight vector from O-DU vendor B

Synthetic Data

Internally created data

AI/ML Model to be published
Test results

Request for model refinement

**AI/ML Model Manager**

Data Aggregator Configs for testing and training
Training Configs (#epochs, batch_size)
Predefined Model Configs

Trained Model to be added to repository

Predefined Model Config

**Model Repository**

Pretrained models for specific configurations and products (e.g. Specific antenna subpanel selection)

Data Config

**Data Repository**
(3D pattern generation from weight vectors)

Data Config

Data

**Data Aggregator**

(e.g. 50%, O-DU Vendor A data,, 40%, O-DU Vendor B data, 10% synthetic data)

Training/Validation data

Test Data

Training Config

Model Config

**Training Engine:**
Train the neural network model starting with the predefined using data provided from data aggregator

**Testing Engine:**
Test the neural network using various Data Aggregation Configs

FIG. 21

EP 4 542 465 A1

**FIG. 22**

2300

2328

2314

2306-1

2302

2312 Tx,2318

2306

Control
Module

2304

Control
Module
Processor(s)

2326

2306

Control
Module

EIRP
prediction
2330

2305

Memory(ies)

Computer
Program
Code
(Instructions)

Control
Module

Rx,2320   2316

2306-2

2310   2324

N/W I/F(s)

I/O and UI
Circuitry and
Elements

2308

## FIG. 23

2402   2400a

2402   2400b

2400c   2402

## FIG. 24

2500

2510 — training a neural network configured to be used to infer an effective isotropic radiated power for at least one angle and at least one weight

2520 — obtaining, based on the training, a trained neural network which is used for inference of the effective isotropic radiated power for the at least one angle and the at least one weight

2530 — transmitting the trained neural network to at least one distributed unit

FIG. 25

2600

2610 — receiving, from a radio unit, a trained neural network used to infer an effective isotropic radiated power for at least one angle and at least one weight

2620 — determining, using the trained neural network, the effective isotropic radiated power for the at least one angle and the at least one weight

2630 — controlling at least one transmission or reception resource associated with an apparatus, based on the determined effective isotropic radiated power

FIG. 26

2700

2710 — determining a predicted effective isotropic radiated power for at least one angle and at least one weight

2720 — wherein the predicted effective isotropic radiated power is determined within a time period using a trained neural network for at least one antenna gain range

2730 — determining whether the predicted effective isotropic radiated power is below an expected value

2740 — performing at least one action, in response to the predicted effective isotropic radiated power being below an expected value

FIG. 27

2800

2810 — determining whether a multi-dimensional pattern function and parameters for determining variables in the function are available

2820 — creating multi-dimensional patterns from weight vectors using the multi-dimensional pattern function, in response to the multi-dimensional pattern function and the parameters for determining the variables in the function being available

2830 — creating the multi-dimensional patterns through interpolation, in response to the multi-dimensional pattern function not being available or the parameters for determining the variables in the function not being available

2840 — creating a dataset from the multi-dimensional patterns

2850 — training a neural network configured to infer an effective isotropic radiated power for at least one angle and at least one weight, using the dataset

2860 — determining a predicted effective isotropic radiated power using the trained neural network for at least one antenna gain range

FIG. 28

2900

performing at least one of:

> training a neural network using training data received from a plurality of radio access network nodes, or

> transmitting, to at least one network entity, a request to receive a trained neural network

2910

2920

wherein the neural network is configured to be used to infer an effective isotropic radiated power

2930

publishing the neural network to provide access to the neural network for the plurality of radio access network nodes or at least one network entity

FIG. 29

Europäisches
Patentamt

European
Patent Office

Office européen
des brevets

# EUROPEAN SEARCH REPORT

**Application Number**

EP 23 20 4286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/177396 A1 (NOKIA SOLUTIONS & NETWORKS OY [FI]; NOKIA AMERICA CORP [US]) 21 September 2023 (2023-09-21) | 1-3,5-7 | INV. G06N20/00 H04B7/06 H04B7/08 |
| Y | * paragraphs [0051], [0052]; figure 5 * * paragraphs [0038], [0042], [0045]; figure 4 * * paragraphs [0026], [0028] - paragraph [0034] * | 4,8 | |
| | - - - - - | | |
| Y | US 2023/297875 A1 (BALEVI EREN [US] ET AL) 21 September 2023 (2023-09-21) * paragraph [0105] - paragraph [0107] * | 4,8 | |
| | - - - - - | | |

| TECHNICAL FIELDS SEARCHED (IPC) |
|---|
| H04B G06N |

The present search report has been drawn up for all claims

| Place of search | Date of completion of the search | Examiner |
|---|---|---|
| Munich | 25 March 2024 | Oana, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

**Application Number**

EP 23 20 4286

The Search Division considers that the present European patent application does not comply with the requirements of unity of invention and relates to several inventions or groups of inventions, namely:

1. claims: 1-8

   An apparatus training a neural network used to infer an EIRP for an angle and a weight, and transmitting the trained model to a distributed unit DU.
   - - -

2. claims: 9-12

   An apparatus predicting an EIRP using a trained neural network, determining if the predicted EIRP is below an expected value and performing an action if below the value.
   - - -

3. claims: 13-16

   An apparatus creating multi-dimensional patterns through interpolation if a multi-dimensional pattern function is not available, training a NN used to infer an EIRP by using a dataset created from the multi-dimensional patterns, and determining a predicted EIRP for an antenna gain range using the trained NN.
   - - -

4. claims: 18(completely); 17, 20(partially)

   An apparatus training a NN using training data from a plurality of RAN nodes, the NN being used to infer an EIRP, and publishing the NN to provide the NN for the RAN nodes or for a network entity.
   - - -

5. claims: 19(completely); 17, 20(partially)

   An apparatus transmitting a request to a network entity to receive a trained NN, the NN being used to infer an EIRP, and publishing the NN to provide the NN for RAN nodes or for a network entity.
   - - -

**ANNEX TO THE EUROPEAN SEARCH REPORT
ON EUROPEAN PATENT APPLICATION NO.**

EP 23 20 4286

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | Publication date | Patent family member(s) | | Publication date |
|---|---|---|---|---|
| WO 2023177396 A1 | 21-09-2023 | NONE | | |
| US 2023297875 A1 | 21-09-2023 | US | 2023297875 A1 | 21-09-2023 |
| | | WO | 2023177933 A1 | 21-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 23.288 V16.12.0*, September 2022